# EUROPÄISCHE PATENTSCHRIFT

(11) **EP 4 543 789 B1**
(45) Veröffentlichungstag und Bekanntmachung des Hinweises auf die Patenterteilung: **27.05.2026**
(21) Anmeldenummer: 24705134.5
(22) Anmeldetag: 13.02.2024
(51) Int. Cl.: B65G 67/22, B65G 65/00, B65G 67/00

(54) **FAHRERLOSES TRANSPORTSYSTEM MIT PASSIVER TRANSFERSTATION ZUR KOPPLUNG AN STETIGFÖRDERER**
DRIVERLESS TRANSPORT SYSTEM WITH PASSIVE TRANSFER STATION FOR COUPLING TO A CONTINUOUS CONVEYOR
SYSTÈME DE TRANSPORT SANS CONDUCTEUR À STATION DE TRANSFERT PASSIVE POUR ACCOUPLEMENT À UN TRANSPORTEUR CONTINU

(30) Priorität: 29.03.2023 DE 102023107995
(43) Veröffentlichungstag der Anmeldung: 30.04.2025
(73) Patentinhaber: SSI Schäfer Automation GmbH (DE), 97232 Giebelstadt (DE)
(72) Erfinder: KLEEDÖRFER, Ralf, 97828 Marktheidenfeld (DE); HUCK, Vitali, 27578 Bremerhaven (DE)
(74) Vertreter: Witte, Weller & Partner Patentanwälte mbB
(86) Internationale Anmeldenummer: PCT/EP2024/053628
(87) Internationale Veröffentlichungsnummer: WO 2024/199805

(56) Entgegenhaltungen:
- CN-U- 206 544 772
- JP-A- 2009 227 424
- JP-A- 2014 105 100
- JP-A- S5 831 815
- JP-U- H04 130 238

## Beschreibung

Die vorliegende Offenbarung betrifft allgemein ein intralogistisch genutztes, fahrerloses Transportsystem (FTS) und insbesondere eine automatische Beladung und Entladung von fahrerlosen Transportfahrzeugen (FTF) an Transferstationen, die an konventionelle Stetigförderer koppeln.

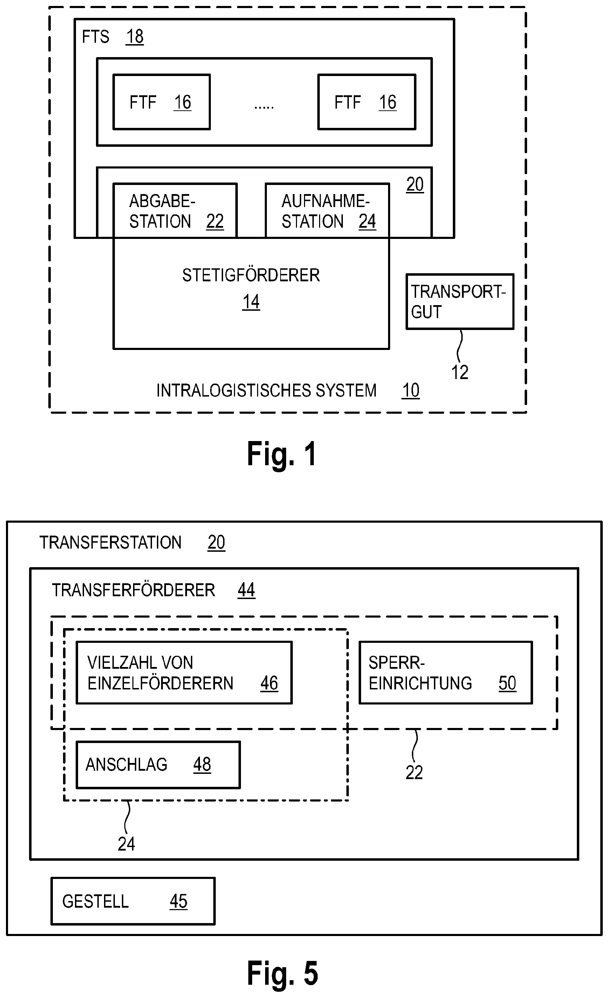

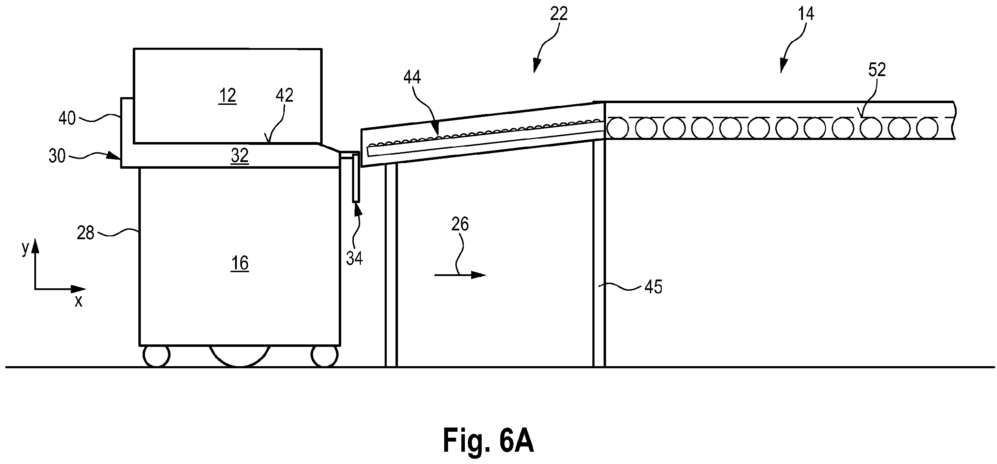

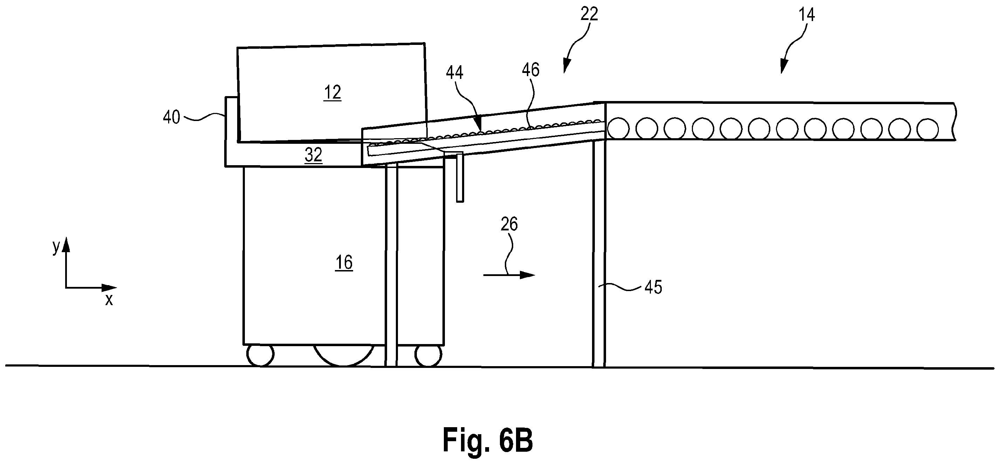

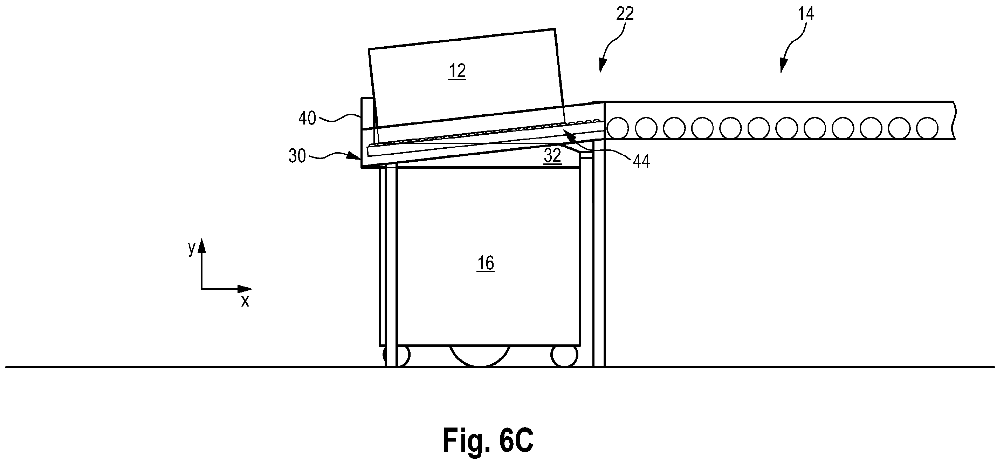

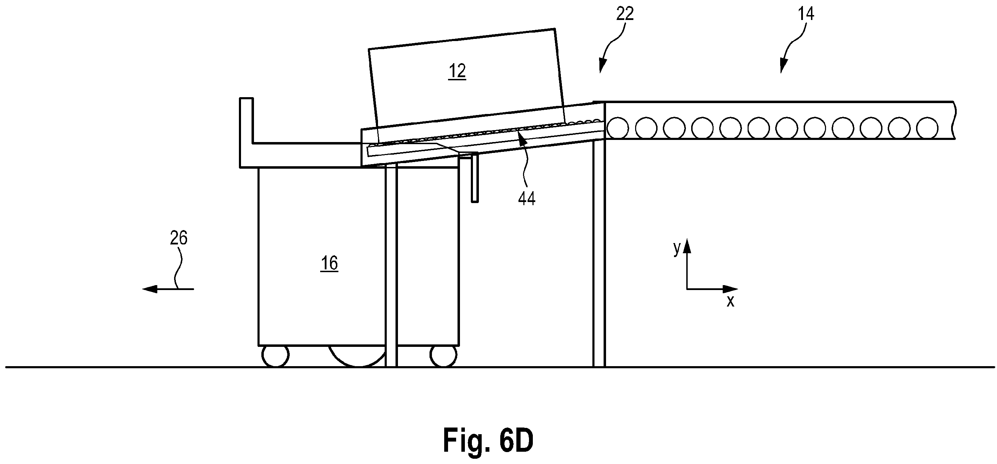

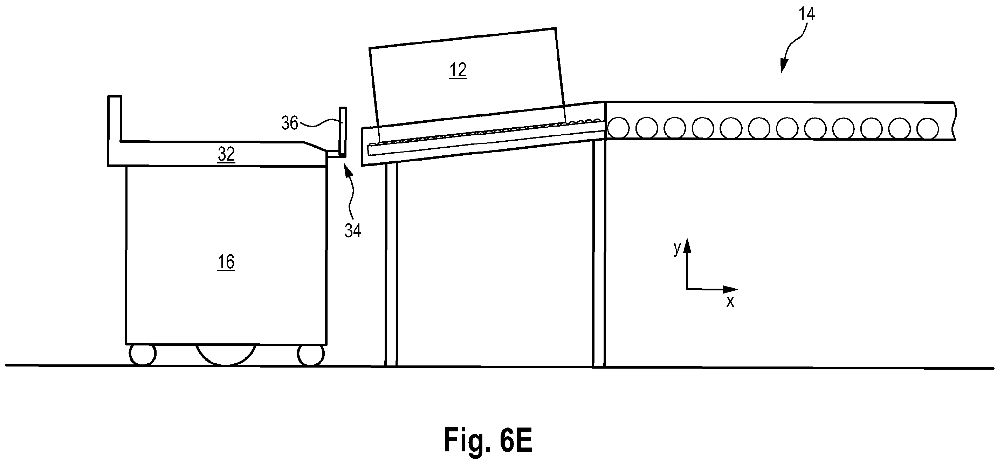

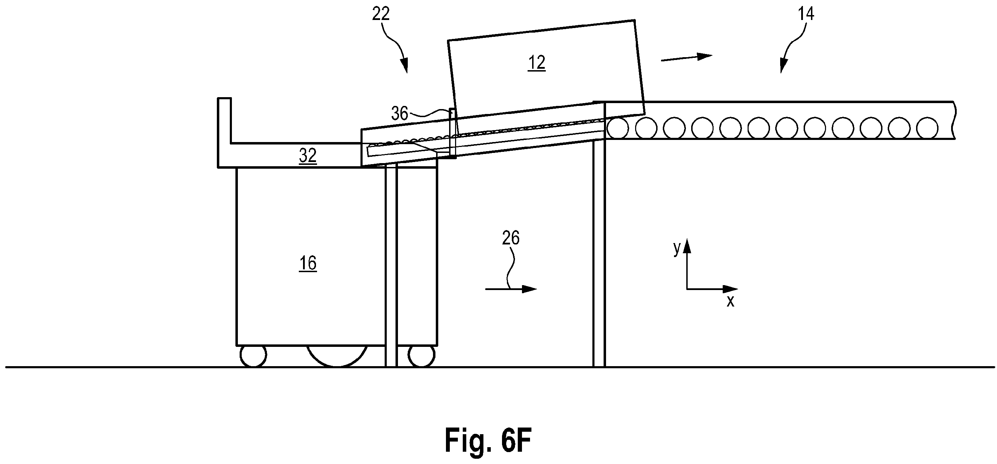

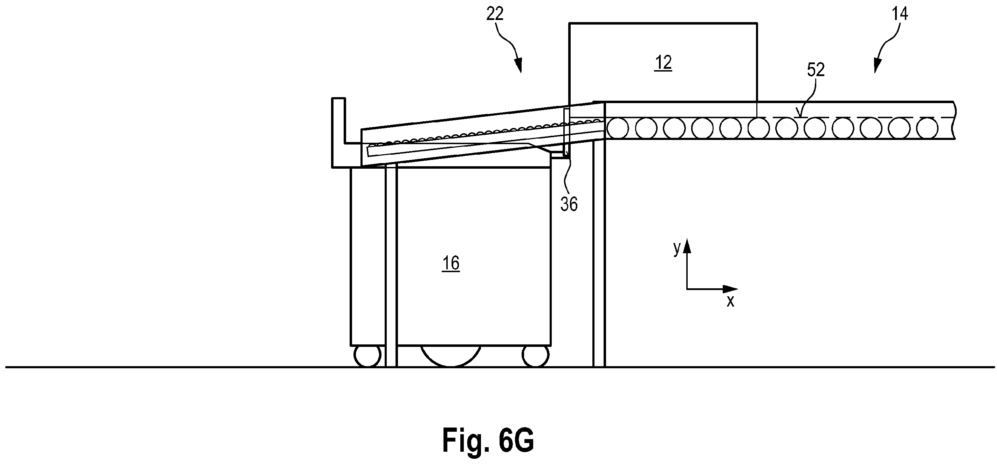

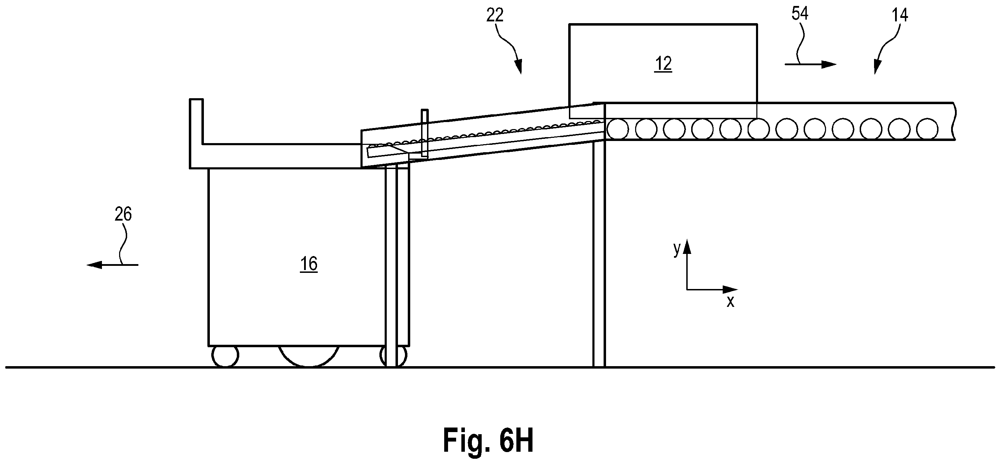

Die DE 20 2018 101 313 U1 zeigt verschiedene Belade- und Entladestationen, die mit FTF betrieben werden, die auf ihrer Oberseite jeweils ein Lastaufnahmemittel aufweisen, das aus parallel zur Fahrtrichtung angeordneten, länglichen Stegen oder (Stütz-)Lamellen gebildet wird, die senkrecht zur Fahrtrichtung zueinander beabstandet sind und die mit ihren Oberseiten gemeinsam eine plane (d.h. flache, ebene, gerade und/oder nicht gewölbte) Transportebene bzw. Transportfläche definieren, auf der Transportgüter während eines Transports ruhen bzw. sitzen. Die Stege sind kamm- bzw. lamellenartig ausgebildet, um die Transportgüter kämmend aufzunehmen und/oder abzugeben. Die Aufnahme und Abgabe erfolgt bevorzugt passiv, insbesondere trägheitsbasiert, indem das FTF durch starr angeordnete Aufnahme- bzw. Abgabeglieder einer Beladestation (Aufnahme) bzw. einer Entladestation (Abgabe) hindurch fährt, wobei die Glieder der Stationen entsprechend kammartig abgeordnet sind, so dass die Glieder und die Stege während einer Durchfahrt nicht miteinander kollidieren. Die Stege weisen zum Zweck der Aufnahme bzw. Abgabe an ihren in der Fahrtrichtung stromaufwärtigen oder stromabwärtigen Enden Finger auf, die als Mitnehmer (vgl. dort Fig. 5 und 6), Schieber (vgl. dort Fig. 14) oder Anschlag (vgl. dort Fig. 10) dienen. Die Finger ragen senkrecht (nach oben) aus der Transportebene heraus und sind unbeweglich an den entsprechenden Enden der Stege fixiert.

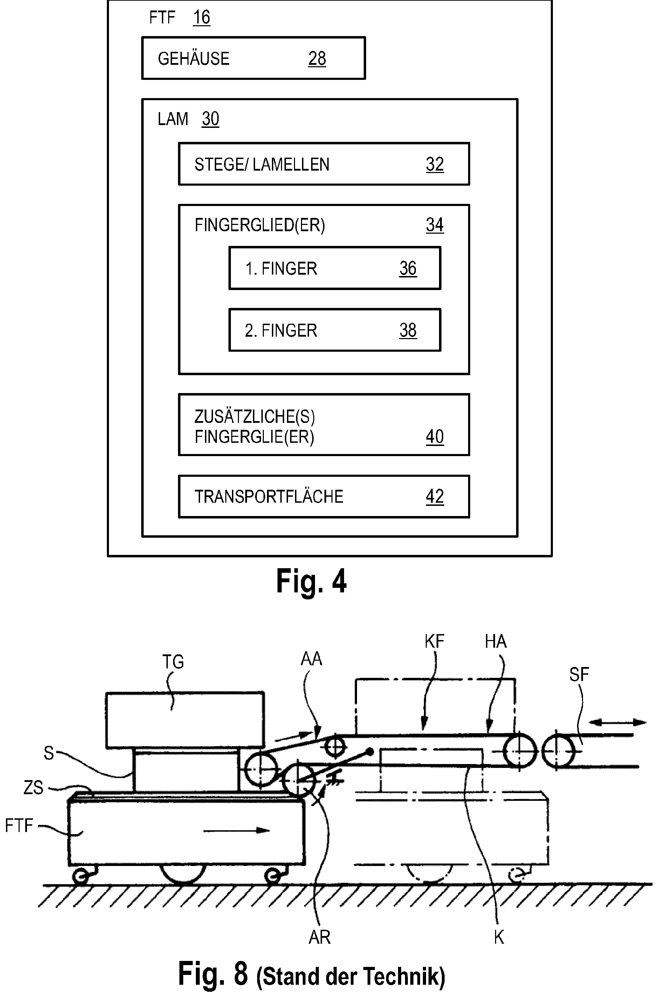

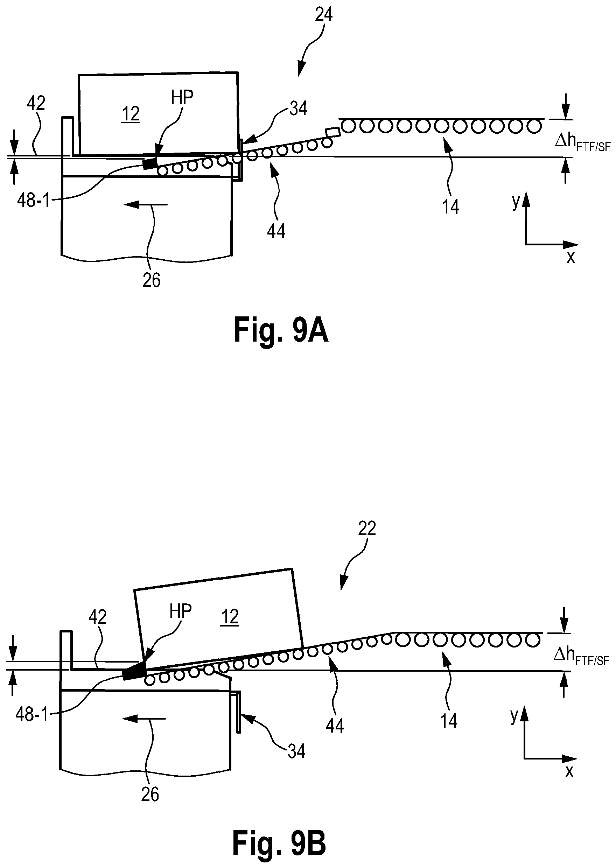

Die DE 10 2014 111 396 A1 zeigt unterschiedlich hohe Typen von FTF, deren lastaufnahmemittelbildenden, lamellen- bzw. kammartigen Stege an ihren stromabwärtigen oder stromaufwärtigen Enden aus der Transportebene vorstehende starre Finger aufweisen. Die Finger können auch beweglich ausgebildet sein, indem sie in einer Höhenrichtung ein- und ausfahrbar sind. Ferner werden eine Entladestation und eine Beladestation (vgl. dort Fig. 9) mit sogenannten "Spaghetti-Förderern" (vgl. dort Fig. 8A) eingesetzt. Die Spaghetti-Förderer weisen senkrecht zur Fahrtrichtung beabstandete, angetriebene Einzelförderer auf, die parallel zur Fahrtrichtung ausgerichtet sind, um mit den Stegen der FTF während einer Durchfahrt der FTF zu kämmen. Die Stege bzw. Lamellen können alternativ auch bürstenartig durch Borsten (vgl. dort Fig. 8B) gebildet werden, die elastisch verformbar sind, so dass sie vom Spaghetti-Förderer während der Durchfahrt des FTF durch die Stationen niedergedrückt werden, und die so hart sind, dass die Güter während des Transports in einem Mindestabstand zur Oberseite des Fahrzeugs gehalten werden.

Da der Spaghetti-Förderer aktiv angetrieben ist, ist es schwierig, die einzelnen Förderer schmal zu konstruieren. Der Antrieb benötigt Platz. Die frei kragende Aufhängung ist erschwert, weil der Antrieb vorhanden ist. Der Spaghetti-Förderer muss durch externe Sensoren überwacht werden, um eine Transportgut-Abgabe und -Aufnahme mit den FTF zu synchronisieren. Der Steuerungsaufwand während eines Transportgutaustauschs ist erheblich, wenn man den Spaghetti-Förderer nicht permanent betreibt, was energetisch ungünstig wäre.

Generell fahren die FTF bei einem kämmenden Austausch der Transportgüter zwischen den FTF und einem Transferförderer durch den Transferförderer hindurch (Durchfahrt) und somit unter eine sich längs anschließende Hauptfördertechnik. Diese FTF müssen auch wieder unter der Hauptfördertechnik hervortreten. Dafür wird bei Planung der FTF-Fahrstrecken Platz benötigt, der nicht anders genutzt werden kann. Die Planungsfreiheit eines Layouters ist dadurch eingeschränkt, was unerwünscht ist. Außerdem muss die Hauptfördertechnik höher als üblich positioniert werden, was eine Nachrüstung von Bestandsanlagen erschweren kann. Die FTF könnten auch niedriger ausgeführt sein. Es wäre in diesem Fall aber für das Unterfahren der Hauptfördertechnik eine aufwendigere Stützkonstruktion erforderlich.

Die US 4,508,484 B zeigt eine Be- und Entladestation, die von einem FTF kämmend durchfahren wird, vgl. Fig. 8. Die Station weist ein Gestell (nicht dargestellt) mit einem integrierten Kettenförderer KF auf, dessen Förderketten K seitlich zum durchfahrenden FTF angeordnet sind und der durch Zahnstangen ZS angetrieben wird, die auf einer Oberseite eines Gehäuses des FTF unterhalb von Stegen S angeordnet sind. Die Zahnstangen ZS kommen während der Durchfahrt, bei einer Abgabe von links nach rechts in Fig. 8, mit einem Antriebsritzel AR des Kettenförderers KF in Eingriff, das über eine Kupplung (nicht dargestellt) und einen Übertrieb (nicht dargestellt) an die beiden seitlichen Förderketten K koppelbar ist. Der Kettenförderer KF weist eingangsseitig einen ansteigenden Abschnitt AA auf, der in einen horizontalen Abschnitt HA übergeht, wo das Transportgut TG vom FTF getrennt ist. Danach kann das Transportgut TG vom Kettenförderer KF an einen stromabwärts angeordneten angetriebenen Stetigförderer SF übergeben werden, indem der Kettenförderer KF über einen Motor (nicht dargestellt) angetrieben wird.

Obwohl bei dieser Lösung auf externe Sensoren verzichtet wird, die eine Synchronisierung der Bewegungen des FTF und des Transferförderers beim Transportgutaustausch bewirken, ist der übertragende Antrieb nachteilig. Die FTF und der Transferförderer kommen für den Übertrieb mechanisch in Kontakt, was eine exakte Ausrichtung erfordert und in einem erhöhten Verschleiß resultiert. Kleinere Höhendifferenzen zwischen den Zahnstangen auf den FTF und den Antriebsritzeln des Transferförderers können in einer mechanischen Blockade resultieren, wenn die Zahnstangen zu hoch positioniert sind, oder zu einem Ausfall des Antriebs des Transferförderers führen, wenn die Zahnstangen zu tief positioniert sind. Die links und rechts auf den FTF angeordneten Zahnstangen müssen in der Längsrichtung der FTF exakt zueinander positioniert sein, um die linken und rechten Förderketten des Transferförderers synchron zu betreiben. Der mechanische Übertrieb stellt also hohe Anforderungen an die Positionierungsgenauigkeit, die im praktischen Alltag schwer zu erfüllen sind.

Die JP S61 50 853 B2, die als JP S58 31815 A angemeldet wurde, offenbart ein System gemäß dem Oberbegriff des Anspruchs 1 sowie ein Verfahren gemäß dem Oberbegriff des Anspruchs 12 und offenbart in ihren Fig. 1-4 eine Transferstation, die auf einer Seite an ein FTS und auf der anderen Seite an einen angetriebenen Rollenförderer koppelt. Eine Transportplattform (LAM) des FTF ist mit zwei vertikal versenkbaren Schubschildern ausgestattet, die individuell aktivierbar sind. Die Transportplattform interagiert kämmend mit der Transferstation, die einen geneigten Abschnitt und einen horizontalen Abschnitt aufweist und die zweispurig aus frei drehenden Rollen aufgebaut ist. Der horizontale Abschnitt koppelt an den angetriebenen Rollenförderer. Bei einer Abgabe des Transportguts an den Rollenförderer schiebt das hintere Schubschild das auf der Plattform ruhende Transportgut zuerst auf den ansteigenden Abschnitt und anschließend auf den Horizontalabschnitt, während das FTF in die Transferstation hineinfährt, wodurch die Trennung des Transportguts von der Plattform erfolgt. Anschließend fährt das FTF (mit angehobenen oder abgesenkten) Schubschild rückwärts wieder aus der Transferstation aus. Bei einer Aufnahme des Transportguts wird dieses vom Rollenförderer auf den nicht angetriebenen Horizontalabschnitt der Transferstation gefördert, so dass das FTF das dort bereitstehende Transportgut (mit abgesenkten Schubschildern) unterfahren kann. Dann wird das vordere Schubschild ausgefahren, um das Transportgut abzuschieben, während das FTF rückwärts wieder aus der Transferstation ausfährt. Währenddessen wird das Transportgut vom Horizontalabschnitt in den geneigten Abschnitt und von dort auf die Plattform geschoben. Diese Lösung benötigt viel Platz, der insbesondere in Produktionsanlage oft nicht zur Verfügung steht. Ein Transferzyklus dauert lang, weil das FTF weite Wege zurücklegen muss. Das FTF-LAM ist komplex, weil eingangs- und ausgangsseitig jeweils ein, insbesondere schaltbares, Schubelement benötigt wird.

Weiterer Stand der Technik findet sich in den Dokumenten: DE 10 2016 203 778 B4, DE 10 2015 003 758 A1, DE 10 2015 114 370 A1, JP H04 130238 U, JP 2014 105100 A und JP 2009 227424 A.

Es daher eine Aufgabe der vorliegenden Offenbarung, ein FTS und ein Austauschverfahren bereitzustellen, die die oben genannten Nachteile zumindest teilweise überwinden.

Diese Aufgabe wird gelöst durch ein fahrerloses Transportsystem, FTS, gemäß Anspruch 1

Die Anordnung ist platzsparend. Das FTF unterfährt lediglich den geneigt ausgebildeten Transferförderer. Das FTF unterfährt den Stetigförderer nicht. Die Transferstation baut in der Längsrichtung kurz, weil sich am Ende kein horizontaler Transferförderer an den schräg gestellten Förderer mehr anschließt. Der schräge Transferförderer koppelt direkt an den Stetigförderer.

Die Zykluszeit zum Austauschen eines Transportguts verkürzt sich, weil das FTF kürzere Wege zurücklegt.

Das FTS kommt beim Austausch der Transportgüter zwischen dem FTF und dem Stetigförderer ohne eine Sensorik im Bereich der Fördertechnik aus. Dies bedeutet, dass keine Sensoren vorgesehen sind, die die verschiedenen Förderer (Transferförderer und/oder Stetigförderer) aktivieren und deaktivieren, um einen Übergang zwischen den Förderern zu bewirken. Der Stetigförderer könnte auch ein (passiver) Schwerkraftförderer sein. Das Transportgut wird allein durch die Bewegung des FTF ausgetauscht. Insbesondere im Bereich des Transferförderers bzw. der Transferstation wird keine Sensorik benötigt.

Ein weiterer Vorteil ist darin zu sehen, dass der Transferförderer der Transferstation nicht angetrieben werden muss. Dies bedeutet, dass auf entsprechende Antriebe verzichtet werden kann. Das Transportgut wird allein vom FTF bewegt. Die Bewegung erfolgt also passiv. Auch durch diese Maßnahme können ein Steuerungsaufwand, ein Energieverbrauch und Investitionskosten minimiert werden.

Das schaltbare Fingerglied ermöglicht ein Unterfahren des Trennförderers ohne Kollision mit dem Transportgut, das sich bereits auf dem Trennförderer befindet. Bei der Aufnahme des Transportguts wird das Fingerglied in seine erhöhte Stellung versetzt, um das Transportgut vom Transferförderer abzuziehen. Bei der Abgabe wird das Fingerglied in seine erhöhte Stellung gebracht, um das auf dem Transferförderer befindliche Transportgut beim Einfahren des FTF in die Transferstation auf den Stetigförderer zu schieben. Es reicht aus, das FTF zu steuern. Eine Sensorik und/oder Aktuatorik im Bereich der Transferstation und des Stetigförderers entfällt.

Weil das Transportgut zwischen dem FTF und der Trennstation kämmend ausgetauscht wird, ist die antriebslose Ausgestaltung des Transferförderers von besonderem Vorteil. Der Transferförderer ist antriebslos ausgebildet. Die Einsparung von entsprechenden Antriebskomponenten ermöglicht eine schmale bzw. schlanke Dimensionierung des Transferförderers insbesondere in einer Richtung senkrecht zur Fahrtrichtung des FTF. Zinkenartig ausgebildete Einzelförderer des Transferförderers können somit in einer hohen Anzahl über die Breite der Transferstation bzw. des FTF verteilt angeordnet werden. Auf diese Weise lässt sich die Last des auszutauschenden Transportguts besser (in einer Querrichtung Z) über den Transferförderer verteilen.

Vorzugsweise ist der Transferförderer eingerichtet, vom FTF derart kämmend unterfahren zu werden, dass in dem Fall, während das Transportgut auf dem Transferförderer ruht, das Transportgut durch das FTF von dem Transferförderer aufgenommen wird, indem das FTF (leer) in den Transferförderer einfährt und sich das mindestens eine Fingerglied in der abgesenkten Stellung befindet und anschließend aus dem Transferförderer ausfährt, während sich das mindestens eine Fingerglied in der erhöhten Stellung befindet, um das Transportgut abzuziehen.

Wieder unterfährt das FTF nur den Transferförderer, nicht aber den Stetigförderer, was platzsparend ist.

Erst die Tatsache, dass das mindestens eine Fingerglied zwischen der erhöhten und der abgesenkten Stellung umschaltbar ist, ermöglicht es, das gleiche FTF (und das oder die Fingerglieder nur auf einer Seite des LAM) zum Abgeben und zum Aufnehmen (mit der, insbesondere gleichen, Transferstation) zu nutzen. Erst die abgesenkte Stellung ermöglicht das Einfahren des FTF in die Transferstation, die mit einem Transportgut bestückt ist. Danach wird das Fingerglied in seine erhöhte Stellung gebracht, um das Transportgut von der Transferstation abzuziehen. Dies ermöglicht es, auf einen Antrieb bei der Transferstation zu verzichten. Dabei wird das FTF vorwärts und rückwärts bewegt, so dass das FTF den Stetigförderer nicht unterfahren muss.

Insbesondere weist das Lastaufnahmemittel in seinem gegenüberliegenden Endabschnitt mindestens ein zusätzliches, vorzugsweise unbewegliches, Fingerglied auf, das (nach oben) aus der Transportfläche vorsteht.

Das oder die zusätzlichen Fingerglieder unterstützen die Abgabe des Transportguts vom FTF an die Transferstation, indem das zusätzliche Fingerglied das Transportgut, insbesondere bergauf, auf die Transferstation schiebt.

Es wird wenig Platz benötigt, weil das FTF den Stetigförderer nicht unterfährt. Dies ist insbesondere in Produktionsanlagen von Vorteil, wo nicht viel Platz zur Verfügung steht.

Die Steuerung des FTF und/oder die Wegpunkte des Streckennetzes sind für eine Pilgerschrittbewegung eingerichtet. Die Pilgerschrittbewegung verhindert, dass das FTF beim Austauschen des Transportguts den Stetigförderer unterfahren bzw. durchfahren muss. Der "Fußabdruck" der (Gesamt-)Anordnung ist verringert. Beim Gestalten der Anordnung ist nur ein Weg für das FTF beim Austauschen zu berücksichtigen. Das FTF fährt auf dem gleichen Weg in die Transferstation ein und aus.

Ferner ist es von Vorteil, wenn: das mindestens eine Fingerglied einen ersten Finger und einen zweiten Finger umfasst; der erste Finger in seiner erhöhten Stellung vorzugsweise höher aus der Transportfläche vorsteht als der zweite Finger in dessen erhöhter Stellung; der erste Finger sich in seiner abgesenkten Stellung befindet und der zweite Finger sich in seiner erhöhten Position befindet, während das FTF das Transportgut vom Transferförderer aufnimmt; und der erste Finger sich in seiner erhöhten Stellung befindet, während das FTF das Transportgut vom Transferförderer an den Stetigförderer abgibt.

Bei dieser Ausgestaltung ist zwischen dem Transferförderer und dem Stetigförderer eine (optionale, vertikale) Stufe vorgesehen, die beim Abgeben des Transportguts vom FTF an den Stetigförderer überwunden werden muss. Deswegen ist der erste Finger vorzugsweise länger ausgestaltet als der zweite Finger. Der erste Finger reicht insbesondere (vertikal) über die Förderebene des Stetigförderers hinaus. Der erste Finger wird beim Abgeben eingesetzt, wohingegen der zweite Finger beim Aufnehmen eingesetzt wird. Der zweite (kürzere) Finger erlaubt ein Eintauchen des entsprechenden Fingerglieds in die Transferstation auch in einem Zustand, wenn ein anderes Transportgut, das sich (noch) auf dem Stetigförderer befindet, bereits für die nächste Aufnahme bereitgestellt ist. Dieses andere Fördergut darf die Transferstation (in der Einfahr- und Ausfahrrichtung) überlappen. Dennoch kollidiert der zweite Finger in seiner erhöhten Stellung während des Abzugs des gewünschten Transportguts nicht mit dem anderen bereits bereitgestellten Transportgut.

Vorzugsweise weist die mindestens eine rampenartige Transferstation eine erste Transferstation zur (indirekten) Abgabe des Transportguts vom FTF (über die Transferstation) an den Stetigförderer und eine zweite Transferstation zur (indirekten) Aufnahme des Transportguts durch das FTF (über die Transferstation) von dem Stetigförderer auf.

Die Aufnahmestation und die Abgabestation können unterschiedlich ausgestaltet sein, was bei einer Aufnahmebewegung eine Stufe zwischen der Aufnahmestation und dem Stetigförderer ermöglicht, wo ein oder mehrere Anschläge vorgesehen werden können, um das aufzunehmende Transportgut beim anfänglichen Zurückschieben durch das FTF auf dem Transferförderer zu halten.

Die Abgabestation kann hingegen stufenlos ausgebildet werden, so dass das FTF das abzugebende Transportgut widerstandsfrei auf den Stetigförderer schieben kann.

Vorzugsweise ist der Transferförderer der ersten Transferstation (Abgabestation) also im Wesentlichen stufenlos an den Stetigförderer koppelbar, wie oben ausgeführt.

Der Transferförderer der ersten Transferstation weist eine Sperreinrichtung auf, die eine Bewegung des Transportguts nur in Richtung des Stetigförderers zulässt, indem z.B. die Rollen des Transferförderers nur bergauf drehbar sind, was eine Abgabe insbesondere mittels einer Pilgerschrittbewegung unterstützt. Alternativ könnte am unteren Ende des Transferförderers ein fester keilförmiger oder ein wegfedernder Anschlag vorgesehen sein, der ein Herabrollen des Transportguts verhindert.

Auf diese Weise kann verhindert werden, dass das an die Transferstation abgegebene Fördergut unbeabsichtigt von der Transferstation abrutscht, insbesondere während das FTF die Pilgerbewegung durchführt, also zurückfährt, um das an die Transferstation abgegebene Transportgut final durch eine Vorwärtsfahrt auf den Stetigförderer aufzuschieben.

An einem unteren Ende des Transferförderers ist mindestens ein Anschlag vorgesehen oder der Transferförderer ist, wenn die Transferstation als Abgabestation ausgebildet ist, mit einer Sperreinrichtung versehen, die verhindert, dass sich das Transportgut von dem nicht angetriebenen Transferförderer herunter bewegt.

Insbesondere ist ein höchster Punkt dieses mindestens einen Anschlags niedriger als die Transportfläche des FTF ist. Dies ist der Fall, wenn der Transferförderer einer Aufnahmestation tiefer liegt als der Stetigförderer, d.h. wenn die Förderebene des Transferförderers und des Stetigförderers eine vertikale Stufe miteinander bilden, siehe Fig. 9A.

Wenn die Förderebenen des Transferförderers und des Stetigförderers stufenlosen ineinander übergehen, wie es generell oder bei einer Abgabestation der Fall sein kann, kann der untere Anschlag auch über die Höhe der Transportfläche des FTF hinausragen, siehe Fig. 9B.

Der Anschlag bewirkt, dass das Transportgut nicht unabsichtlich von der Transferstation abrutscht.

Insbesondere steigt der Transferförderer in Richtung des Stetigförderers (stetig) an.

Der Transferförderer nutzt die Schwerkraft, um das auszutauschende Transportgut an vorbestimmten Positionen für die Aufnahme und die Abgabe zu positionieren. Die Schräge des Transferförderers unterstützt ferner das Verbinden und Lösen des Transportguts mit bzw. von dem LAM.

Insbesondere wird der Transferförderer durch mindestens zwei Einzelförderer gebildet, die senkrecht zu einer Fahrtrichtung des FTF beabstandet zueinander angeordnet sind, so dass die Stege berührungslos in einen Freiraum zwischen den Einzelförderern eintauchen können.

Auf diese Weise wird der kämmende Austausch des Transportguts zwischen dem FTF und der Transferstation ermöglicht.

Die Aufgabe wird ferner gelöst durch ein Verfahren gemäß Anspruch 12, zum Austauschen eines Transportguts zwischen einem fahrerlosen Transportfahrzeug, FTF, und einem, insbesondere angetriebenen, Stetigförderer über eine rampenartige Transferstation, die aus einem nicht angetriebenen, (ausschließlich) geneigten Transferförderer besteht, wobei die Transferstation und das FTF eingerichtet sind, das Transportgut kämmend auszutauschen, während das FTF entweder in die Transferstation einfährt oder aus der Transferstation ausfährt, wobei das FTF ein Lastaufnahmemittel, LAM, aufweist, das an seinem stromabwärtigen Ende mindestens ein Fingerglied aufweist, das in einer erhöhten Stellung aus einer durch das LAM definierten planen Transportfläche herausragt und das in einer abgesenkten Stellung unterhalb der Transportfläche positioniert ist; wobei das Verfahren die Schritte aufweist: im Falle einer Abgabe des Transportguts vom FTF an den Stetigförderer: mit dem beladenen FTF parallel zum Transferförderer kämmend in die Transferstation einfahren, bis das FTF das Transportgut vollständig auf den Transferförderer aufgeschoben hat; danach mit dem FTF aus der Transferstation ausfahren, während sich das mindestens eine Fingerglied in der abgesenkten Stellung befindet und das Transportgut auf dem Transferförderer ruht; und danach mit dem FTF erneut kämmend in die Transferstation einfahren, während sich das mindestens eine Fingerglied in seiner erhöhten Stellung befindet, bis das Transportgut vollständig mit dem mindestens einen Fingerglied auf den Stetigförderer aufgeschoben ist; oder im Falle einer Aufnahme des Transportguts von dem Stetigförderer durch das FTF: Fördern des Transportguts durch den Stetigförderer von dem Stetigförderer auf den Transferförderer der Transferstation; Stoppen des Transportguts, vorzugsweise passiv, auf dem Transferförderer; danach mit dem leeren FTF kämmend in die Transferstation einfahren, während sich das mindestens eine Fingerglied in der abgesenkten Stellung befindet, bis das mindestens eine Fingerglied hinter einer Hinterkante des Transportguts positioniert ist und eine Vorderkante auf dem LAM ruht; danach das mindestens eine Fingerglied aus der abgesenkten Stellung in die erhöhte Stellung bewegen; und schließlich mit dem FTF kämmend aus der Transferstation ausfahren, so dass das mindestens eine Fingerglied in seiner erhöhten Stellung das Transportgut vom Transferförderer abschiebt.

Vorzugsweise fährt das FTF beim Einfahren vorwärts und beim Ausfahren in einer zum Vorwärtsfahren entgegengesetzten Richtung rückwärts.

Insbesondere wird der Stetigförderer während der Abgabe aktiv unterstützend angetrieben wird, um das Transportgut auf sich zu ziehen.

Vorzugsweise wird der Stetigförderer während der Aufnahme aktiv unterstützend angetrieben wird, um das Transportgut auf dem Transferförderer zu halten, während das anfangs leere FTF kämmend in die Transferstation einfährt.

Es versteht sich, dass die vorstehend genannten und die nachstehend noch zu erläuternden Merkmale der vorliegenden Offenbarung nicht nur in der jeweils angegebenen Kombination, sondern auch in anderen Kombinationen oder in Alleinstellung verwendbar sind, ohne den Rahmen der beanspruchten Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: ein Blockdiagramm eines intralogistischen Systems;
- Fig. 2: eine perspektivische Ansicht eines fahrerlosen Transportsystems mit einer Abgabestation für ein FTF innerhalb eines intralogistischen Systems;
- Fig. 3: eine perspektivische Ansicht eines FTS mit einer Aufnahmestation innerhalb eines intralogistischen Systems;
- Fig. 4: ein Blockdiagramm eines FTF;
- Fig. 5: ein Blockdiagramm einer Transferstation;
- Fig. 6: eine Abfolge verschiedener Zustände während einer Abgabe einer Transportguts von einem FTF über eine Transferstation an einen angekoppelten Stetigförderer;
- Fig. 7: eine Abfolge verschiedener Zustände während einer Aufnahme eines Transportguts von einem FTF über eine Transferstation an einen angekoppelten Stetigförderer;
- Fig. 8: eine Seitenansicht einer bekannten Transferstation mit einem bekannten FTF; und
- Fig. 9: eine schematische Seitenansicht einer stufig angeordneten Aufnahmestation (Fig. 9A) und eine schematische Seitenansicht einer stufenlos angeordneten Abgabestation (Fig. 9B).

Die Erfindung kommt z.B. in einem intralogistischen System 10 der Fig. 1 zum Einsatz. Das System 10 kann ein Lager- und Kommissioniersystem (nicht dargestellt), wie z.B. eine Distributionsanlage, oder Ähnliches sein, wo Transportgüter 12 zwischen einem Lager (nicht dargestellt) und z.B. Kommissionier- und Packplätzen (nicht dargestellt) oder zwischen dem Lager und einem Stetigförderer 14, der ein Netzwerk zur fördertechnischen Verbindung mit beliebigen Arbeitsplätzen darstellen kann, auszutauschen. Das System 10 kann aber auch in der Produktion eingesetzt werden, wo Arbeitsplätze mit Material zu beliefern sind und wo leere Transportbehälter, Abfall und/oder fertige (Zwischen-)Produkte abzuholen und ggf. auch wieder einzulagern sind. Wie in der (Intra-)Logistik üblich werden nachfolgend eine Längsrichtung mit "X", eine Querrichtung mit "Z" und eine Höhenrichtung mit "Y" bezeichnet. Die Richtungen X, Y und Z definieren vorzugsweise ein kartesisches Koordinatensystem.

Unter einem (Transport-)"Gut" wird nachfolgend z.B. eine Lager- und/oder Kommissioniereinheit verstanden, die innerhalb des intralogistischen Systems 10 von einem Startpunkt (Quelle) zu einem Zielpunkt (Senke) zu transportieren ist. Das Gut, das auch als Transportgut 12 bezeichnet wird, kann ein (Lager-) Ladehilfsmittel (nicht dargestellt) sowie einen Artikel (nicht dargestellt) umfassen. Das Gut 12 kann aber auch nur den Artikel allein umfassen, wenn kein Lagerladehilfsmittel benötigt wird.

Als (Lager-)Ladehilfsmittel können z.B. Paletten, Gitterboxen, Container, Behälter, Kartons, Tablare, (Hängeförder-) Taschen und Ähnliches eingesetzt werden. Ein "Artikel" kann ein einzelnes Stückgut, oder eine zusammenhängende Gruppe von vorkonfektionierten (mitunter auch unterschiedlichen) Stückgütern sein, die dann auch als Verpackungseinheit (VPE) oder Gebinde bezeichnet wird. Artikel sind durch einen Artikeltyp unterscheidbare (kleinste) Einheiten eines Artikelsortiments. Stückgüter sind individualisierte, unterscheidbare Artikel, die einzeln gehandhabt werden können.

Ein oder mehrere fahrerlose Transportfahrzeuge (FTF) 16 sind Teil eines fahrerlosen Transportsystems (FTS) 18. Die nachfolgenden Erläuterungen gelten für jedes der FTF 16, das im FTS 18 eingesetzt wird.

Das FTF 16 ist ein automatisiertes, vorzugsweise zwangsgeführtes, Fahrzeug, das Transportaufgaben in dem intralogistischen System 10 schnell, billig und skalierbar durchführt. Das FTF 16 kann vollkommen autonom betrieben werden, indem es seinen Weg durch das System 10 selbstständig bestimmt und ohne Zwangsführung (und Leitsteuerung) findet. Insbesondere kann es sich bei dem FTF 16 um ein "WEASEL" (eingetragene Marke der Firma SSI Schäfer) handeln.

Das FTF 16 ist ein Unstetigförderer und bewegt sich vorzugsweise entlang einem vordefinierten Transportnetzwerk (nicht dargestellt), welches z.B. durch Linien ausgebildet sein kann, die auf einen Boden eines Gebäudes geklebt oder gemalt sein können und die Wegpunkte des Netzwerks miteinander verbinden. Alternativ können auch diskrete (Gitter-)Punkte als Wegpunkte zur Navigation benutzt werden, die über virtuelle Linien miteinander verbunden sein können. Entlang dieses Transportnetzwerks können z.B. RFID-Marker als Implementierung von Wegunkten vorgesehen werden. Eine Linie zwischen zwei benachbarten Wegpunkten wird nachfolgend als (Förder-)Strecke bezeichnet. Es versteht sich, dass die Strecken in Form von virtuellen Verbindungslinien realisiert sein können, z.B. wenn ein internes GPS- oder Laser-Navigationssystem eingesetzt wird. Analoges gilt für die Wegpunkte.

Das FTS 18 umfasst neben dem mindestens einen FTF 16 eine oder mehrere Transferstationen 20. Die Transferstationen 20 können als Abgabestationen (erste Transferstationen) 22 und/oder als Aufnahmestationen (zweite Transferstationen) 24 ausgebildet sein. Eine oder mehrere der Transferstationen 20 können derart eingerichtet sein, dass sie ohne weitere Modifikation sowohl als Abgabestation 22 als auch als Aufnahmestation 24 nutzbar sind.

Es versteht sich, dass das System 10 weitere, nicht dargestellte Komponenten umfassen kann, die unten noch näher erläutert werden.

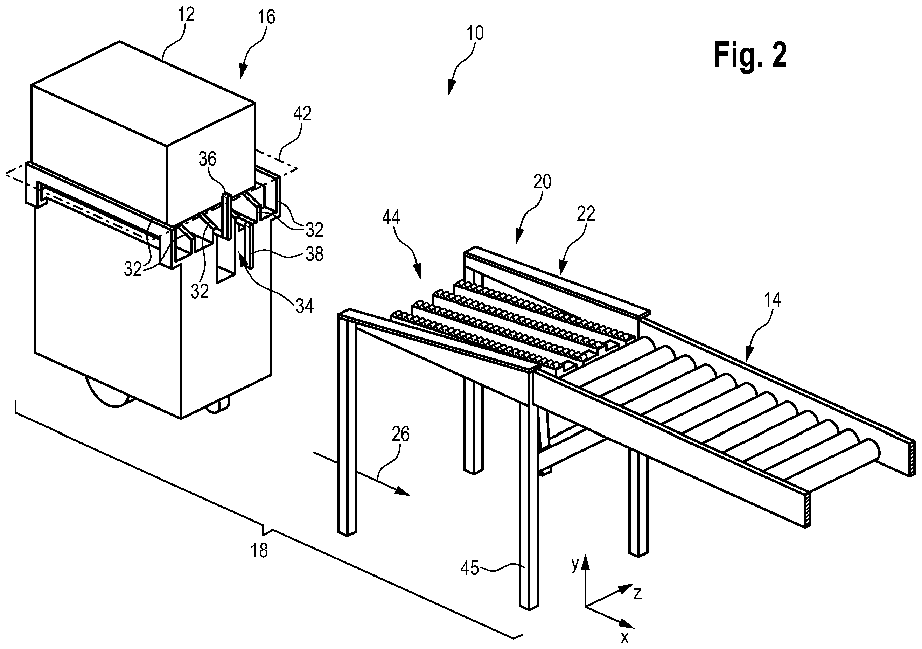

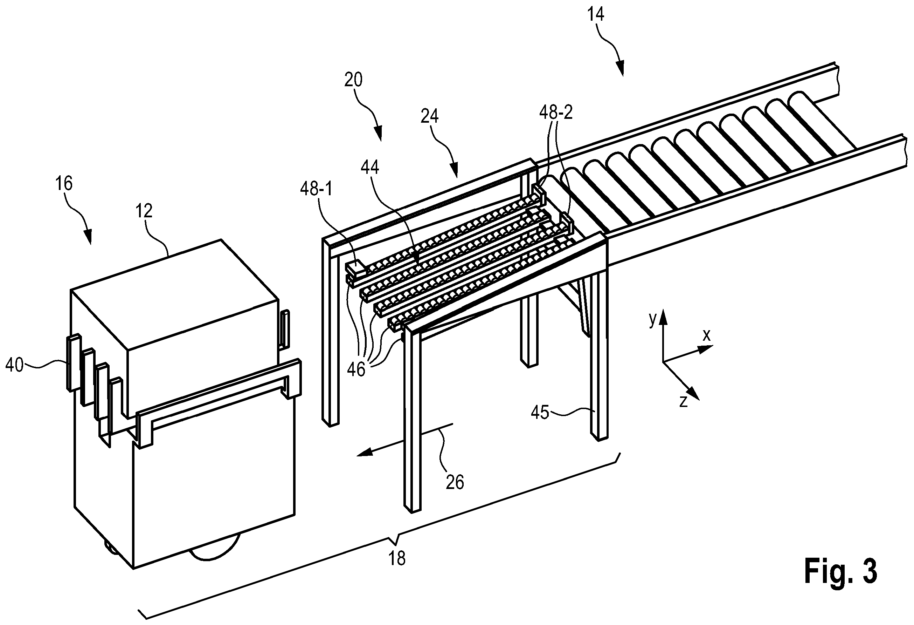

Die Fig. 2 und 3 zeigen jeweils eine exemplarische Transferstation 20, die direkt an einen (nur teilweise dargestellten) Stetigförderer 14 koppelt, der exemplarisch als Rollenförderer veranschaulicht ist. Der Stetigförderer 14 transportiert die Transportgüter von und zu Arbeits- und/oder Lagerplätzen. Es versteht sich, dass der Stetigförderer 14 auch durch einen Bandförderer, Kettenförderer und Ähnliches implementiert sein könnte.

Fig. 2 veranschaulicht eine exemplarische Abgabestation 22, über die das FTF 16 ein oder mehrere Transportgüter 12 an den Stetigförderer 14 (passiv, d.h. ohne dass dieser angetrieben wird) abgeben kann, indem das FTF 16 (geradlinig) in einer Fahrtrichtung 26, hier parallel zur X-Richtung, in die Transferstation 20 der Fig. 2 einfährt. Fig. 3 veranschaulicht eine exemplarische Aufnahmestation 24, über die das FTF 16 ein oder mehrere Transportgüter 12 von dem Stetigförderer 14 (passiv) abholen kann, indem das FTF 16 (geradlinig) in der Fahrtrichtung 26, hier parallel entgegengesetzt zur X-Richtung, aus der Transferstation 20 der Fig. 3 ausfährt. Die Abgabestation 22 der Fig. 2 und die Aufnahmestation 24 der Fig. 3 sind unterschiedlich ausgebildet, könnten aber auch gleich ausgebildet sein.

Wie in Fig. 4 veranschaulicht, weist jedes der FTF 16 ein Gehäuse 28 auf, auf dessen Oberseite, vgl. Fig. 2 und 3, ein Lastaufnahmemittel (LAM) 30 vorgesehen ist.

Das LAM 30 wird aus mehreren Stegen bzw. Lamellen 32 gebildet, wie eingangs beschrieben. Die Stege 32 sind parallel zur Längsrichtung des FTF 16, in den Fig. 2 und 3 parallel zur X-Richtung, ausgerichtet und in der Querrichtung Z zueinander beabstandet. Die Stege 32 ragen nach oben entlang der Y-Richtung aus dem Gehäuse 28 heraus und definieren Freiräume zwischen sich, in welche Transferförderer (nicht dargestellt) der Transferstationen 20 kämmend eintauchen können, während das FTF 16 parallel zur X-Richtung in die Transferstation 20 einfährt oder ausfährt. Die Oberseiten der Stege 32 definieren gemeinsam eine plane Transportfläche 42, auf der das oder die Transportgüter 12 während einer Fahrt mit dem FTF 16 ruhen. Seitlich äußere Stege 32 können höher ausgebildet sein, vgl. Fig. 2 und 3, um die Transportgüter 12 gegen ein seitliches Abrutschen (in der Z-Richtung) während einer Transportfahrt zu sichern.

Das LAM 30 weist ferner mindestens ein (schaltbares) Fingerglied 34 auf, das zwischen einer erhöhten Stellung und einer abgesenkten Stellung umschaltbar ist und das in einem der (in der Längsrichtung des FTF 16 positionierten) Endabschnitte der Stege 32 vorgesehen ist. In der Fig. 2 sind exemplarisch zwei Fingerglieder 34 gezeigt, die z.B. einen oder mehrere erste Finger 36 und/oder einen oder mehrere zweite Finger 38 umfassen.

In der Fig. 2 sind exemplarisch ein erster Finger 36 und ein zweiter Finger 38 in einem (hier stromabwärtigen) Endabschnitt der Transportfläche 42 vorgesehen. Der zweite Finger 38 ist in seiner abgesenkten Stellung gezeigt, während der erste Finger 36 in seiner (vorzugsweise vertikal ausgerichteten) erhöhten Stellung gezeigt ist. Der erste Finger 36 ist vorzugsweise länger als der zweite Finger 38 ausgebildet, so dass der erste Finger 36 in seiner erhöhten Stellung höher über die Transportfläche 42 hinausragt als der zweite Finger 38 in dessen (nicht gezeigter) erhöhten Stellung. Die Funktion der unterschiedlich langen Finger 36 und 38 wird unten noch genauer erläutert werden.

Außerdem versteht es sich, dass in Fig. 2 der erste Finger 36 bei einer Abgabe des Transportguts 12 vom FTF 16 an die Transferstation 20 bzw. die Abgabestation 22 sich ebenfalls in seiner abgesenkten Position befinden könnte, weil für die Abgabe an die Station 20 bzw. 22 keiner der Finger 36 und 38 unbedingt benötigt wird, vgl. Fig. 5. Auch versteht es sich, dass die Finger 36 und 38 auch bei anderen Stegen 32 als den mittleren Stegen 32 vorgesehen werden können. Je mittiger die Finger 36 und 38 angeordnet werden, desto weniger Finger 36 und 38 werden benötigt, um ein Verdrehen des Transportguts 12 während der Abgabe an die Station 20 zu verhindern.

Allgemein gilt, dass jede Transferstation 20 rampenartig, ausgebildet ist und einen, vorzugsweise in Richtung des Stetigförderers 14 (stetig) ansteigenden, nicht aktiv angetriebenen, mehrspurigen Transferförderer 44 aufweist, wie in Fig. 5 gezeigt, der in ein stationär positioniertes Gestell 45 integriert ist, wie in den Fig. 2 und 3 gezeigt. Der Transferförderer 44 koppelt direkt an den Stetigförderer 14. Das FTF 16 ist indirekt an den Stetigförderer 14 gekoppelt, indem die Transferstation 20 bei einem Austausch des Transportguts 12 dazwischengeschaltet ist. Der Transferförderer 44 weist keinen eigenen Antrieb auf, ist also nicht aktiv angetrieben, so dass eine (passive) Bewegung von auf dem Transferförderer 44 positionierten Transportgütern 12 allein durch das FTF 16 oder den Stetigförderer 14 verursacht werden kann. Der Transferförderer 44 ist mehrspurig, indem mehrere (lineare) Einzelförderer 46 vorgesehen sind, die parallel zu den Stegen 32 des LAM 30 des FTF 16 orientiert sind, wenn das FTF in die Transferstation 20 einfährt oder ausfährt. Es sind mindestens zwei Einzelförderer 46 vorgesehen, die mit den Stegen 32 (berührungslos) kämmen. Dies bedeutet, dass die Einzelförderer 46 vorzugsweise berührungslos in die Freiräume zwischen den Stegen 32 eingreifen, um das Transportgut 12 aufzunehmen oder abzugeben. Die Einzelförderer 32 sind geneigt angeordnet, so dass sie von oben in die Freiräume eintauchen, während das FTF in die Transferstation 20 einfährt. Ferner sind die Einzelförderer 46 so dimensioniert und geneigt, dass ein Endabschnitt der Einzelförderer 46, der vom Stetigförderer 14 abgewandt ist, tiefer als die Transportfläche 42 aber höher als die Oberseite des Gehäuses 28 positioniert ist. In den Fig. 2 und 3 sind exemplarisch vier Einzelförderer 46 gezeigt. Es versteht sich, dass mehr oder weniger als vier Einzelförderer 46 eingesetzt werden können, insbesondere in Abhängigkeit von einer Anzahl von Freiräumen zwischen den Stegen 32.

Die Aufnahmestation 24 der Fig. 3 weist im Vergleich zur Abgabestation 22 der Fig. 2 zusätzlich mindestens einen Anschlag 48, vorzugsweise in jedem Endabschnitt des Transferförderers 44 und insbesondere im unteren Endabschnitt, auf. Jeder der Anschläge 48 ist vorzugsweise unbeweglich, um Aktuatoren (und Sensoren) einzusparen. Eine Höhenabmessung jedes Anschlags 48 ist vorzugsweise so gewählt, dass das Transportgut 12 bei einer (horizontal gerichteten) Bewegung in einer bevorzugten Bewegungsrichtung über den jeweiligen Anschlag 48 hinweg bewegbar ist, wohingegen das Transportgut 12 bei einer Bewegung in die entgegengesetzte Richtung an den Anschlag 48 anstößt.

In der Fig. 3 werden exemplarisch fünf Anschläge 48 vorgesehen. Es können mehr oder weniger Anschläge 48 eingesetzt werden. Exemplarisch sind zwei Anschläge 48-1 in dem jeweiligen, vom Stetigförderer 14 abgewandten unteren, Endbereich der beiden seitlich äußeren Einzelförderer 46 vorgesehen, wohingegen die anderen exemplarisch drei Anschläge 48-2 in dem jeweiligen (oberen) Endbereich, der dem Stetigförderer 14 zugewandt ist, der seitlich äußeren Einzelförderer 46 und des mittleren Einzelförderers 46 vorgesehen sind. Die Anschläge 48-2 weisen eine Höhenabmessung auf, die an eine optional vorgesehene Höhedifferenz zwischen dem Transferförderer 44 und dem Stetigförderer 14 derart angepasst ist, dass das Transportgut 12 über die Anschläge 48-2 hinweggleiten kann, wenn das Transportgut 12 der Transferstation 20 vom Stetigförderer zur Aufnahme durch das FTF 16 zugeführt wird.

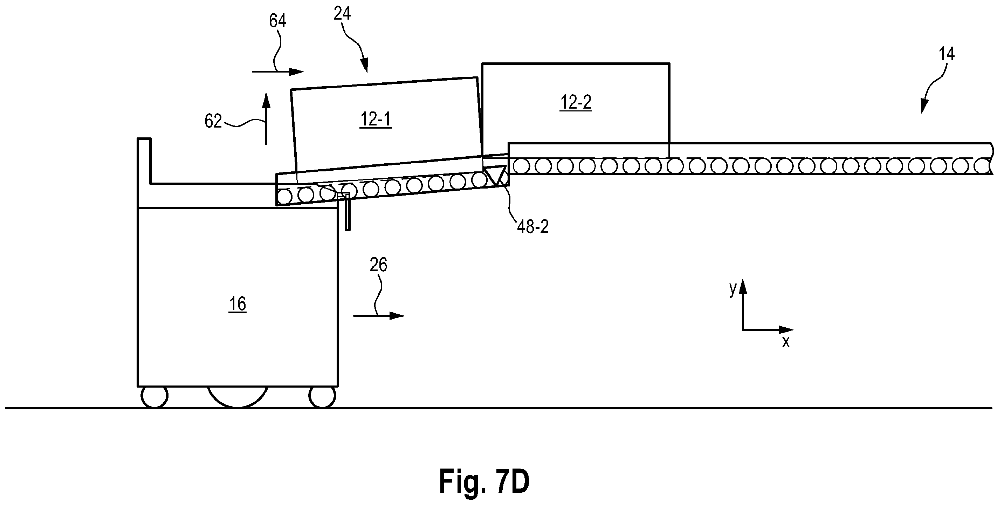

Die Anschläge 48-2 verhindern, dass das auf dem Transferförderer 44 lokalisiertes Transportgut 12 während einer Aufnahmebewegung, bei der das FTF 16 das Transportgut in der positiven X-Richtung unterfährt, auf den Stetigförderer 14 zurückbewegt wird. Der oder die Anschläge 48-2 können weggelassen werden, wenn der Stetigförderer 14 während der Aufnahme durch das FTF 16 in der Fig. 3 in der negativen X-Richtung betrieben wird, so dass das Transportgut 12 nicht vom FTF 16 auf den Stetigförderer 14 zurückgeschoben werden kann. Alternativ oder ergänzend könnte ein weiteres Transportgut 12-2 auf dem Stetigförderer 14 positioniert sein, das ein Zurückschieben des aufzunehmenden Transportguts 12-1 verhindert, siehe Fig. 7D.

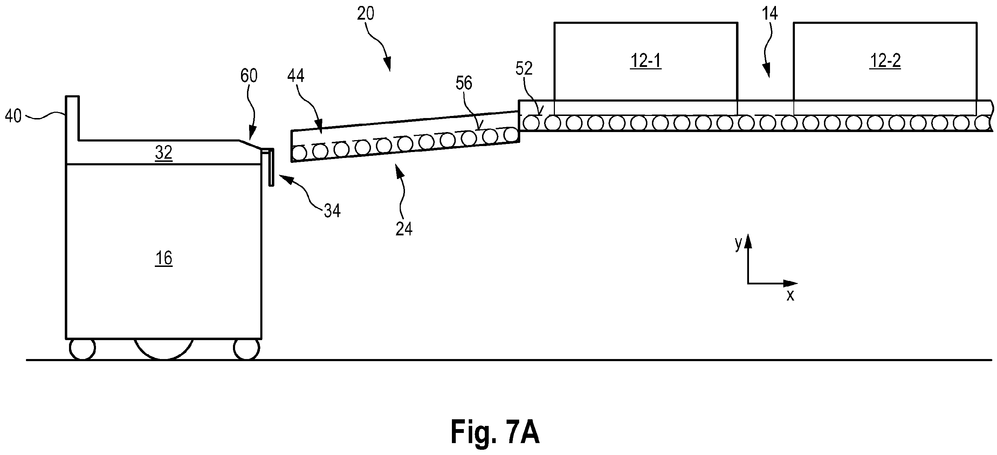

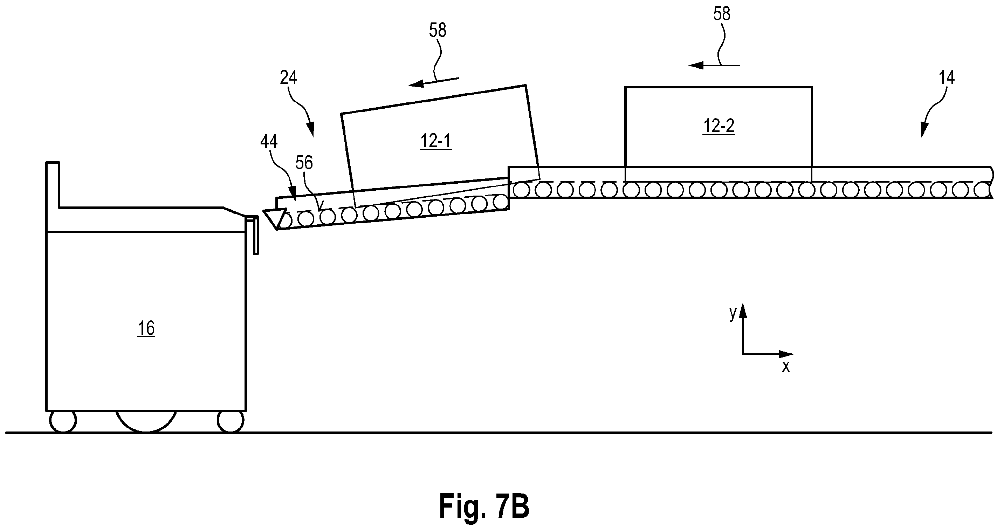

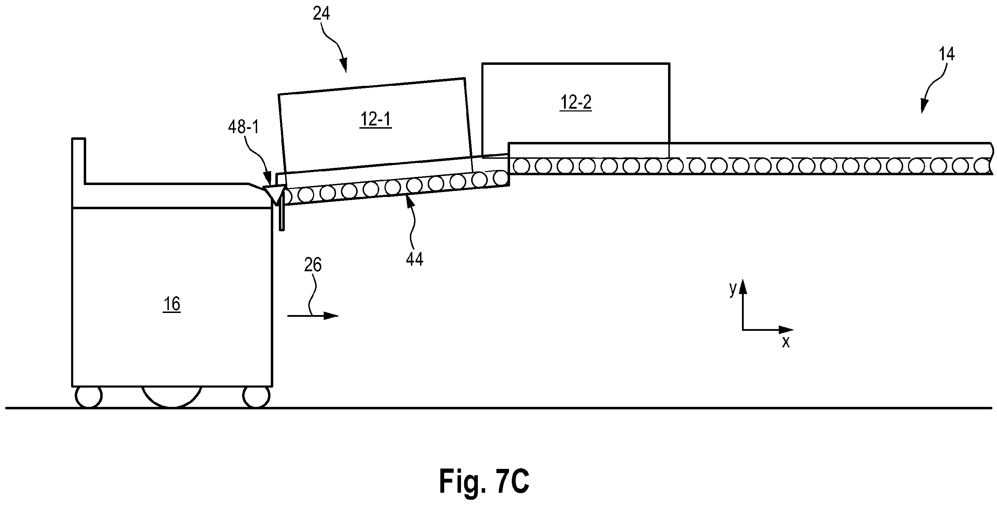

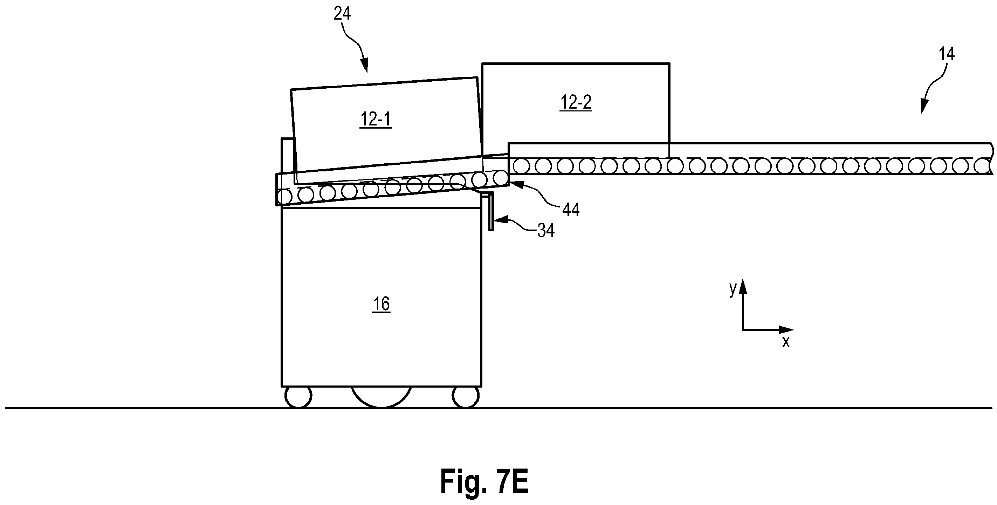

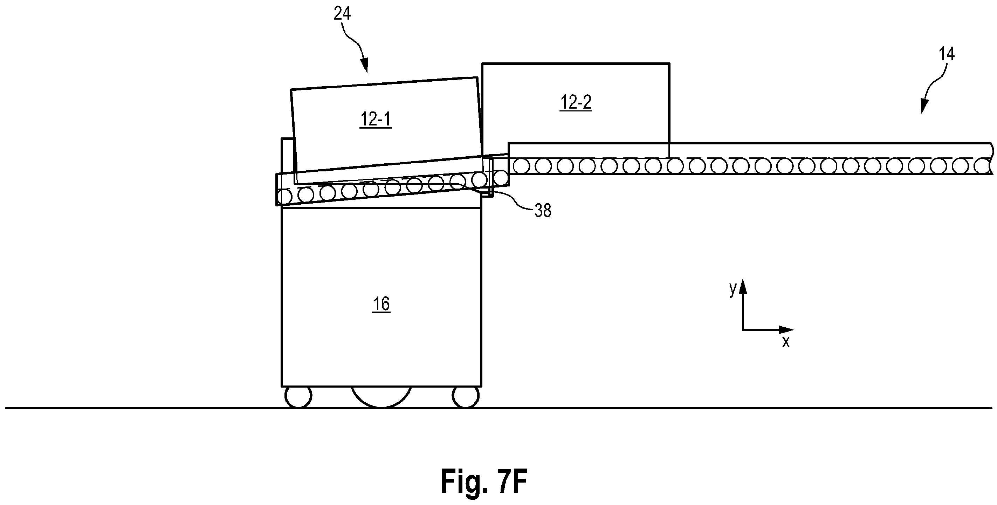

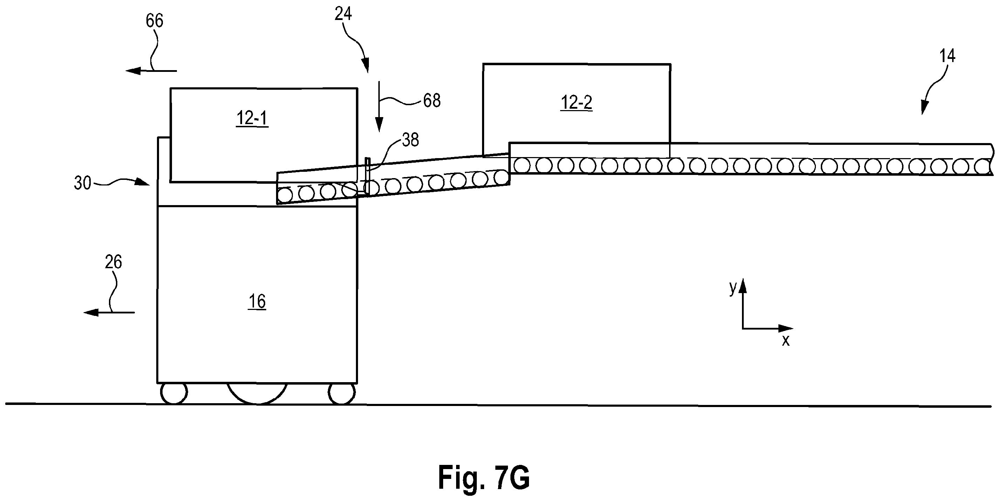

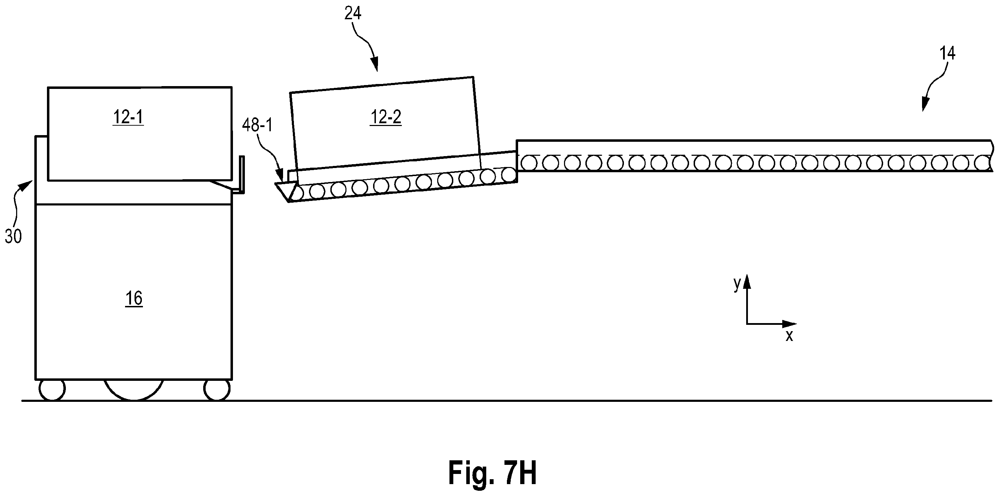

Die vorderen, unteren Anschläge 48-1 des Transferförderers 44 der Aufnahmestation (vgl. Fig. 7) sind so angeordnet, dass die höchsten Punkte (Oberkanten) der Anschläge 48-1 niedriger sind als die Transportfläche 42 der Stege 32 des FTF 16. Bei der Fahrt des FTF 16 entgegen der positiven X-Richtung (Ausfahrt) ist das Transportgut 12 auf der Transportfläche 42 des FTF also gegenüber den vorderen Anschlägen 48-1 in der Y-Richtung beabstandet (angehoben) und wird in diesem Fall nicht (mehr) zurückgehalten. Die Anschläge 48-1 könnten fest sein oder federnd gelagert sein, so dass sie in der Y-Richtung niedergedrückt werden können.

Der Transferförderer 44 der Aufnahmestation 24 der Fig. 3 kann mit dem Stetigförderer 14 eine Stufe bilden, die beim Transferförderer 44 der Abgabestation 22 der Fig. 2 vorzugsweise nicht vorhanden ist. Der stufenlose Übergang in der Fig. 2 zwischen dem Transferförderer 44 und dem Stetigförderer erleichtert es dem FTF 16, die Transportgüter 12 von der Transferstation 20 auf den Stetigförderer 14 zu schieben.

In der Fig. 2 kann die durch die Schubbewegung des FTF 16 hervorgerufene Abgabe der Transportgüter 12 von der Abgabestation 22 an den Stetigförderer 14 zusätzlich zur Schubbewegung durch das FTF 16, die unten noch näher erläutert wird, unterstützt werden, indem der Stetigförderer 14 in der Fig. 2 in der positiven X-Richtung betrieben wird. In diesem Fall ist es sogar möglich, den ersten Finger 36 so kurz zu wählen, dass er in seiner erhöhten Stellung nicht über eine Oberseite der planen Förderfläche des Stetigförderers 14 hinausragt, weil das Transportgut 12, sobald es aus der Schräge des nicht angetriebenen Transferförderers 44 in die Horizontale des Stetigförderers 14 kippt, auf dem Stetigförderer 14 liegt und somit vollständig unter der Kontrolle des angetriebenen Stetigförderers 14 ist.

Die Einzelförderer 46 der Fig. 2 und 3 können z.B. durch sogenannte Rollenleisten implementiert sein. Jede der Rollenleisten weist eine Vielzahl von (frei drehenden) Rollen auf, die jeweils linear hintereinander in einem linear leistenförmigen Rahmen gelagert sind.

In der Abgabestation 22 der Fig. 2 können die Rollen zusätzlich eingerichtet sein, nur in einer Richtung drehbar zu sein, so dass die Transportgüter 12 nur in der positiven X-Richtung (bergauf) auf den Stetigförderer 14 zu bewegt werden können. Dies bedeutet, dass die Transportgüter 12 trotz der Neigung der Einzelförderer 46 des Transferförderers 44 der Fig. 2 aufgrund der Schwerkraft nicht in der negativen X-Richtung von der Abgabestation 22 abrutschen können. Alternativ ist am unteren Ende des Transferförderers ein, z.B. fester keilförmiger oder ein wegfedernder, Anschlag vorgesehen, der ein Herabrollen des Transportguts verhindert.

In der Aufnahmestation 24 der Fig. 3 können die Rollen in beiden Richtungen frei drehend eingerichtet sein, weil die Anschläge 48 ein unbeabsichtiges Entfernen der Transportgüter 12 vom Transferförderer 44 verhindern.

Es versteht sich, dass die Einzelförderer 46 generell durch einen anderen Förderertypen, wie z.B. Gleitförderer, Gleitflächen, Riemenförderer oder Ähnliches, implementiert werden können. Generell kann der Transferförderer 44 auch durch (nicht angetriebene, passive) Gleitflächen implementiert sein, und zwar sowohl bei der Aufnahmestation 24 als auch bei der Abgabestation 22.

Den Transferförderer 44 der Abgabestation 22 und der Aufnahmestation 24 ist aber gemein, dass ihre Einzelförderer 44 zinkenartig frei kragend am Gestell 45 der jeweiligen Transferstation 20 montiert sind. Die Einzelförderer 46 sind an einem dem Stetigförderer 14 zugewandten Ende des Gestells 20 so montiert, dass sie an dem abgewandten Ende frei in Luft hängen, um, vorzugsweise berührungslos, kämmend mit den LAM 30 der FTF 16 zu interagieren. Am abgewandten Ende sind die Einzelförderer 46 tiefer positioniert als am zugewandten Ende. Die Einzelförderer 46 sind parallel zueinander mit vorzugsweise der gleichen Neigung gegenüber der Horizontalen orientiert.

Nachfolgend werden eine Abgabesequenz (Fig. 6) und eine Aufnahmesequenz (Fig. 7) beschrieben werden.

Die Fig. 6 und 7 zeigen Seitenansichten der Abgabestation 22 bzw. der Aufnahmestation 24 der Fig. 2 und 3 zu aufeinanderfolgenden Zeitpunkten während einer Transportgut-Abgabe bzw. einer Transportgut-Aufnahme. Auch das FTF 16 kann das gleiche wie in den Fig. 2 und 3 sein.

In Fig. 6A ist eine Anfangssituation gezeigt, bei der das (beladene) FTF 16, das mit einem einzigen Transportgut 12 beladen sein kann, parallel zur positiven X-Richtung in die Abgabestation 22 einfährt, siehe Fahrtrichtung 26. Es versteht sich, dass das FTF 16 auch mit mehr als einem Transportgut 12 beladen sein könnte. Das FTF 16 fährt geradlinig entlang der X-Richtung kämmend in den Transferförderer 44 der Abgabestation 22 ein.

Die (parallel zur X-Richtung orientierten) Stege 32 des LAM 30 können an ihrem in der Fahrtrichtung 26 stromaufwärtigen Ende mit mindestens einem zusätzlichen Fingerglied 40 (pro Steg 32) versehen sein. Die Fingerglieder 34 können sich in ihrer abgesenkten Stellung befinden, so dass sie unterhalb der Transportfläche 42 positioniert sind. Da die Fig. 6 das FTF 16 der Fig. 2 benutzt, ist das FTF 16 (ebenfalls) mit einem ersten Finger 36 und einem zweiten Finger 38 versehen, die exemplarisch an stromabwärtigen Enden der mittleren Stege 32 (z.B. um die X-Richtung drehbar oder in der Y-Richtung ausfahrbar) vorgesehen sind.

In der Seitenansicht der Fig. 6A ist gut zu erkennen, dass der Transferförderer 44 stufenlos in den Stetigförderer 14 übergeht, der z.B. als ein (angetriebener) Rollenförderer ausgebildet sein kann. Dies bedeutet, dass eine Oberseite (bzw. Förderfläche) des Transferförderers 44 (stromabwärts) auf einer Höhe endet, die identisch zu einer Höhe einer exemplarisch horizontal orientierten Förder- bzw. Transportfläche 52 des Stetigförderers 14 ist, die in der Fig. 6A durch eine Strichlinie veranschaulicht ist.

In der Fig. 6B ist das FTF 16 bereits teilweise in die Abgabestation 22 eingefahren und fährt auch noch weiter in die Station 22 hinein. Die Stege 32 und die Einzelförderer 46 des Transferförderers 44 überlappen sich (berührungslos) zumindest teilweise in der x-Richtung und kämmen miteinander. Eine vordere Kante des Transportguts 12 befindet sich bereits auf dem Transferförderer 44 und ist leicht von den Stegen 32 abgehoben. Die zusätzlichen Fingerglieder 40 schieben das Transportgut 12 in der X-Richtung auf den Transferförderer 44 und verhindern, dass das Transportgut 12 vom FTF 16 nach hinten herunterfällt. Das Transportgut 12 ist leicht gegenüber dem FTF 16 geneigt, indem die vordere Kante des Transportguts 12 angehoben ist.

In der Fig. 6C ist das FTF 16 bereits vollständig in und unter die Abgabestation 22 eingefahren. Das FTF 16 hat gestoppt und fährt nicht mehr länger in die X-Richtung. Das Transportgut 12 sitzt ausschließlich auf dem Transferförderer 44. Dies bedeutet, dass das Transportgut 12 von den Stegen 32 des LAMs 30 vollständig abgehoben und gelöst ist. Lediglich die zusätzlichen Fingerglieder 40 können noch im Kontakt mit einer Rückseite des Transportguts 12 sein.

Das vom Stetigförderer 14 abgewandte Ende des Transferförderer s14 ist vollständig in die Freiräume unter die Stege 32 getaucht. Dieses abgewandte Ende liegt tiefer als eine Oberseite der Stege 32.

In der Fig. 6D fährt das FTF 16 rückwärts, d.h. in der negativen X-Richtung, wieder (kämmend) aus der Abgabestation 22 heraus. Das Transportgut 12 verbleibt auf dem Transferförderer 44, weil der Transferförderer 44 mit einer Sperreinrichtung 50 (vgl. Fig. 5) versehen ist, die verhindert, dass sich das Transportgut 12 von dem nicht angetrieben Transferförderer 44 herunter bewegt. Alternativ ist am unteren Ende des Transferförderers 44 ein, z.B. fester keilförmiger oder ein wegfedernder, Anschlag (nicht gezeigt) vorgesehen, der ein Herabrollen des Transportguts 12 verhindert.

Sobald das FTF 16 ausreichend weit aus der Abgabestation 22 herausgefahren ist, kann das mindestens eine Fingerglied 34, hier mit seinem ersten Finger 36, aus seiner abgesenkten Stellung in die erhöhte Stellung bewegt bzw. umgeschaltet werden. In der Fig. 6E ist dies exemplarisch durch eine Drehbewegung des ersten Fingers 36 im Uhrzeigersinn (entlang der negativen x-Richtung betrachtet) erfolgt.

Danach wird das FTF 16 wieder vorwärts, d.h. in der positiven x-Richtung, in die Abgabestation 22 hinein bewegt, wie in Fig. 6F gezeigt, während das Transportgut 12, das sich auf dem Transferförderer 44 der Abgabestation 22 befindet, bergauf in Richtung des Stetigförderers 14 geschoben wird. Diese Schubbewegung wird mindestens so lange fortgesetzt, bis das Transportgut 12 den Transferförderer 44 (vollständig) verlassen hat und an den Stetigförderer 14 abgegeben wurde, wie es in der Fig. 6G gezeigt ist. Das Transportgut 12 hat den Transferförderer 44 verlassen, wenn das Transportgut 12 aus der Schräge in die Horizontale kippt.

In der Fig. 6G hat das FTF 16 gestoppt. Das Transportgut 12 steht allein auf dem Stetigförderer 14 und ist horizontal orientiert. Der erste Finger 36 kann in der vertikalen Y-Richtung über die Oberseite bzw. Transportfläche 52 des Stetigförderers 14 hinausragen. Dies muss nicht so sein. Die Länge des ersten Fingers 36 bzw. des entsprechenden Fingerglieds 34 kann kürzer gewählt werden. Die Länge des entsprechenden Fingerglieds 34 ist so zu wählen, dass das FTF 16 das Transportgut 12 so lange bergauf schieben kann, bis das Transportgut 12 aus der Schräge (vgl. Fig. 6F) in die Horizontale auf den Stetigförderer 14 kippt (vgl. Fig. 6G).

Es versteht sich, dass der in den Fig. 6E bis 6G gezeigte Ablauf auch durchgeführt werden kann, während das FTF 16 mit einem neuen Transportgut beladen ist, was in der Fig. 6 aber nicht veranschaulicht ist. In den Fig. 6E bis 6F ist das FTF 16 unbeladen. Das FTF 16 könnte aber ein oder mehrere Transportgüter 12 auf seinen Stegen 22 tragen, die während das Transportgut 12, das sich bereits auf dem Transferförderer 44 befindet, durch den aufgerichteten ersten Finger 36 in Richtung des Stetigförderers 14 geschoben wird. Gleichzeitig werden dann das oder die Transportgüter 12, die sich auf dem LAM 30 des FTF 16 befinden, wiederum auf den Transferförderer 44 aufgeschoben, so dass sich diese hinter dem Transportgut 12 befinden, das bereits (wie in den Fig. 6E bis 6G veranschaulicht) auf dem Transferförderer 44 lokalisiert ist.

Ferner versteht es sich, dass die zusätzlichen Fingerglieder 40, die beim Beladen der Abgabestation 22 hilfreich sind, nicht zwingend vorgesehen sein müssen. Die zusätzlichen Fingerglieder 40 können auch weggelassen werden.

In Fig. 6H ist die Situation veranschaulicht, wo das Transportgut 12 (vollständig) auf den Stetigförderer 14 aufgeschoben wurde und das FTF 16 rückwärts aus der Abgabestation 22 in der negativen X-Richtung ausfährt. Die Abgabe des Transportguts 12 vom FTF 16 an den Stetigförderer 14, indirekt über die Transferstation 20 (Abgabestation 22), ist dann abgeschlossen. Danach können weitere Transportgüter 12 an die Abgabestation 22 abgegeben werden, wie bereits oben erläutert. Das abgegebene Transportgut 12 kann jederzeit vom Stetigförderer 14 aus der in der Fig. 6H gezeigten Position abtransportiert werden (vgl. Pfeil 54), indem ein Antrieb des Stetigförderers 14 aktiviert wird.

Es versteht sich, dass der Antrieb des Stetigförderers 14 während des Übergangs des Transportguts 12 vom Transferförderer 44 auf den Stetigförderer 14 unterstützend eingeschaltet werden kann. In diesem Fall zieht der Stetigförderer 14 das Transportgut 12 aktiv auf sich, während das FTF 16 das Transportgut 12 vom Transferförderer 44 auf den Stetigförderer 14 schiebt. Dies ist insbesondere bei schweren Transportgütern 12 von Vorteil.

Fig. 7 zeigt eine Seitenansicht der Fig. 3, wobei einige Teile, die in Fig. 3 veranschaulicht sind, in der Fig. 7 zur Vereinfachung einer Darstellung weggelassen wurden. Die Fig. 7 veranschaulicht eine Aufnahme eines Transportguts 12 durch das FTF 16, über die Transferstation 20 (Aufnahmestation 24), vom Stetigförderer 14. Das FTF 16 und der Stetigförderer 14 sind exemplarisch vom gleichen Typ wie in den Fig. 2 und 6. Die Transferstation 20 ist in der Fig. 7 eine andere als in der Fig. 6. Es versteht sich, dass aber auch identische Transferstationen 20 verwendet werden könnten.

Fig. 7A zeigt eine Ausgangssituation bei der Aufnahme. Exemplarisch befinden sich zwei Transportgüter 12-1 und 12-2 auf dem Stetigförderer 14. Es können mehr oder weniger Transportgüter 12 auf dem Stetigförderer 14 positioniert sein. Transportgüter 12-1 und 12-2 ruhen auf der Förderfläche 52 des Stetigförderers 14. Das FTF 16 steht vor der Aufnahmestation 24. Die Fingerglieder 34 befinden sich in ihren abgesenkten Stellungen. Das Gestell 45 der Aufnahmestation 24 ist in der Fig. 7 nicht gezeigt.

Die Fig. 7B zeigt, dass die beiden Transportgüter 12-1 und 12-2 vom Stetigförderer 14 in der negativen X-Richtung aktiv in Richtung der Aufnahmestation 24 gefördert werden. Die Zuführung der beiden Transportgüter 12-1 und 12-2 ist durch Pfeile 58 veranschaulicht. Das FTF 16 kann weiterhin vor der Aufnahmestation 24 stehen. Das vordere Transportgut 12-1 hat die Stufe zwischen dem Transferförderer 44 der Aufnahmestation 24 und dem Stetigförderer 14 bereits größtenteils überwunden. Das Transportgut 12-1 steht mit seiner vorderen Kante auf dem Transferförderer 44 bzw. auf der durch den Transferförderer 44 definierten Förderfläche 56 der Transferstation 20 (Aufnahmestation 24).

In der Fig. 7C bewegt sich das FTF 16 vorwärts in der positiven X-Richtung. Das FTF 16 fährt in die Aufnahmestation 24 ein, um das Transportgut 12-1 aufzunehmen. Das Transportgut 12-1 ist vollständig auf dem Transferförderer 44 positioniert und wird durch die ersten Anschläge 48-1, vgl. Fig. 3, auf dem Transferförderer 44 gehalten. Das Transportgut 12-2 ist vom Stetigförderer 14 so weit (in der negativen X-Richtung) nach vorn gefördert worden, dass sich ein vorderer Abschnitt des Transportguts 12-2 in der X-Richtung mit der Aufnahmestation 24 überlappt.

Die Fig. 7D zeigt, dass das FTF 16 noch weiter in die Aufnahmestation 24 eingefahren ist. Das Transportgut 12-1 ist über eine Anlaufschräge 60 (vgl. Fig. 7A) der Stege 32 auf die Stege 32 gehoben worden, wie durch einen Pfeil 62 angedeutet. Gleichzeitig wird das Transportgut 12-1 in der positiven x-Richtung durch das FTF 16 etwas bergauf geschoben, bis das Transportgut 12-1 die zweiten Anschläge 48-2 und/oder das Transportgut 12-2 erreicht und von diesen gehalten wird. Das Transportgut 12-2 wird z.B. durch den Stetigförderer 14 in dieser Position gehalten, wenn die Rollen des Stetigförderers 14 in diesem Moment angetrieben werden (oder sich nicht in die entgegengesetzte Richtung drehen lassen). Die Schubbewegung des Transportguts 12-1 durch das FTF 16 ist durch einen Pfeil 64 verdeutlicht in Fig. 7D.

In der Fig. 7E ist das FTF 16 vollständig in die Aufnahmestation 24 eingefahren. Das Transportgut 12-1 sitzt mit seiner vorderen Kante auf den Stegen 32 des FTF 16 und mit seiner hinteren Kante auf dem Transferförderer 44. Die Fingerglieder 34 befinden sich weiterhin in ihrer abgesenkten Stellung. Anschließend kann z.B. der zweite (kürzere) Finger 38 in seine erhöhte Stellung geschaltet werden, wie in Fig. 7F veranschaulicht, ohne das hintere Transportgut 12-2 zu berühren. In diesem Zustand berührt der zweite Finger 38 das vordere Transportgut 12-1 (noch) nicht. Das FTF 16 fährt dann aus der Aufnahmestation 24 (in der negativen X-Richtung) aus.

In Fig. 7G ist das FTF 16 gezeigt, nachdem das FTF 16 größtenteils aus der Aufnahmestation 24 ausgefahren ist. Der zweite Finger 38 schiebt das Transportgut 12-1 vom Transferförderer 44 der Aufnahmestation 24 in der negativen X-Richtung ab, wie durch einen Pfeil 66 veranschaulicht, so dass sich das Transportgut 12-1 absenkt, wie durch einen Pfeil 68 veranschaulicht, bis es vollständig auf dem LAM 30 des FTF 16 sitzt.

In Fig. 7H hat das FTF 16 die Aufnahmestation 24 vollständig verlassen. Das Transportgut 12-1 sitzt vollständig auf dem LAM 30. Das FTF 16 kann das Transportgut 12-1 dann mit einer Transportfahrt an jeden beliebigen Zielpunkt transportieren. Das Transportgut 12-2 kann vom Stetigförderer 14 vollständig auf die Aufnahmestation 24 gefördert werden, um von einem unbeladenen (ggf. anderen) FTF 16 aufgenommen zu werden.

Es ist bevorzugt, wenn das FTF 16 nur die Transferstation 20 nicht aber den Stetigförderer 14 unterfahren kann. In diesem Fall benötigt eine Anordnung bestehend aus der Transferstation 20 und dem angekoppelten Stetigförderer 14 einen kleineren (Aufstell-)Raum, weil das FTF 16 die Transferstation 20 beim Abgeben und Aufnehmen nicht durchfährt, sondern nur unterfährt. Wenn das FTF 16 bei einem Transfer des Transportguts 12 die Transferstation 20 durchfährt, muss das FTF 16 den Stetigförderer 14 unterfahren können. Das FTF 16 muss in diesem Fall ferner an irgendeiner Stelle auch wieder unter dem Stetigförderer 14 hervortreten, was einen größeren "Fußabdruck" verursacht, als wenn das FTF 16 das Transportgut 12 durch eine Pilgerschrittbewegung - also durch ein entsprechend abgestimmtes Vorwärtsfahren und Rückwärtsfahren - mit dem Stetigförderer 14 austauscht.

Auch wenn im allgemeinen Sprachgebrauch unter einer "Pilgerschrittbewegung" eine im Wesentlichen vorwärtsgerichtete Bewegung bestehend aus z.B. zwei Schritten nach vorn und einem Schritt nach hinten verstanden wird, ist im vorliegenden Text eine Bewegung des FTF 16 gemeint, bei der das FTF 16 nur unter die Transferstation 20 (bzw. deren Transferförderer 44), aber nicht unter den Stetigförderer 14, fährt und dann wieder herausfährt.

Fig. 9A zeigt eine schematische Seitenansicht einer stufig angeordneten Aufnahmestation 24, bei der zwischen den Förderebenen des Transferförderers 4 und des Stetigförderers 14 eine vertikale Stufe angeordnet ist. Das FTF 16 bewegt sich unter dem Transferförderer 44 (wieder) heraus, um das Transportgut 12 aufzunehmen. Ein höchster Punkt HP des unteren Anschlags 48-1 liegt (vertikal) tiefer als die Transportfläche 42 des LAM 30.

Fig. 9B zeigt eine schematische Seitenansicht einer stufenlos angeordneten Abgabestation 22, bei der die Förderebenen des Transferförderers 44 und des Stetigförderers 14 stufenlos ineinander übergehen. Die Transportebene 42 des LAM 30 liegt tiefer als ein höchster Punkt HP des unteren Anschlags 48-1. Der höchste Punkt HP des Anschlags 48-1 kann ein dem Stetigförderer 14 zugewandtes Ende des Anschlags 48-1 sein. Der Anschlag 48-1 kann ein ansteigendes Seitenprofil aufweisen, damit das Transportgut 12 beim (in positiver X-Richtung) Abgeben vom FTF 16 an den Transferförderer 44 sanft ansteigend über den Anschlag 48-1 geschoben werden kann. Ein dem Stetigförderer 14 abgewandtes Ende des Anschlags 48-1 liegt vorzugsweise tiefer als die Transportfläche 42 des LAM 30.

### BEZUGSZEICHENLISTE

### Intralogistisches System

- 12: Transportgut
- 14: Stetigförderer
- 16: FTF
- 18: FTS
- 20: Transferstation
- 22: Abgabestation/1. Transferstation
- 24: Aufnahmestation / 2. Transferstation
- 26: Fahrtrichtung
- 28: Gehäuse von 16
- 30: LAM
- 32: Stege/Lamellen
- 34: Fingerglied
- 36: 1. Finger
- 38: 2. Finger
- 40: zusätzl. Fingerglied(er)
- 42: Transportfläche
- 44: Transportförderer
- 45: Gestell von 20
- 46: Einzelförderer
- 48: Anschlag
- 50: Sperreinrichtung
- 52: Förderfläche von 14
- 54: Abtransport
- 56: Förderfläche von 24
- 58: Zuführung
- 60: Anlaufschräge von 32
- 62: Hubbewegung
- 64: Schubbewegung
- 66: Abziehbewegung
- 68: Absenkbewegung

## Patentansprüche

1. Fahrerloses Transportsystem, FTS, (18) mit:
mindestens einer rampenartigen Transferstation (20), die eingerichtet ist, ein Transportgut (12) mit einem daran horizontal koppelbaren Stetigförderer (14) auszutauschen; und
einem fahrerlosen Transportfahrzeug, FTF, (16) zum Transport des Transportguts (12) von und/oder zu der mindestens einen Transferstation (20);
wobei das FTF (16) ein Lastaufnahmemittel (30) aufweist, das eine plane Transportfläche (42) bildet, auf der das Transportgut (12) während einer Transportfahrt ruht, wobei das Lastaufnahmemittel (30) in einem Endabschnitt davon mindestens ein Fingerglied (34) aufweist, das zwischen einer erhöhten Stellung und einer abgesenkten Stellung umschaltbar ist, wobei das mindestens eine Fingerglied (34) in der erhöhten Stellung aus der Transportfläche (42) vorsteht;
wobei jede der Transferstationen (20) aus einem geneigten, nicht angetriebenen mehrspurigen Transferförderer (44) besteht,
**dadurch gekennzeichnet, dass** an einem unteren Ende der Transferförderers (44) mindestens einen Anschlag (48) angeordnet ist oder der Transferförderer (44), wenn die Transferstation (20) als Abgabestation (22) ausgebildet ist, mit einer Sperreinrichtung (50) versehen ist, die verhindert, dass sich das Transportgut (12) von dem nicht angetriebenen Transferförderer (44) herunter bewegt, und wobei der Transferförderer (44) eingerichtet ist, vom FTF (16) derart kämmend unterfahren zu werden, dass:
in einem Fall, während das Transportgut (12) auf dem Transferförderer (44) ruht, das Transportgut (12) durch das FTF (16) von dem Transferförderer (44) aufgenommen wird, indem das FTF (16) aus dem Transferförderer (44) ausfährt und sich das mindestens eine Fingerglied (34) in der erhöhten Stellung befindet; und
in einem Fall, während das Transportgut (12) auf dem Transferförderer (44) ruht, das Transportgut (12) durch das FTF (16) an den Stetigförderer (44) abgegeben wird, indem das FTF (16) in den Transferförderer (44) einfährt und sich das mindestens eine Fingerglied (34) in der erhöhten Stellung befindet.

2. Fahrerloses Transportsystem (18) nach Anspruch 1, wobei der Transferförderer (44) eingerichtet ist, vom FTF (16) derart kämmend unterfahren zu werden, dass in dem Fall, während das Transportgut (12) auf dem Transferförderer (44) ruht, das Transportgut (12) durch das FTF (16) von dem Transferförderer (44) aufgenommen wird, indem das FTF (16) in den Transferförderer (44) einfährt und sich das mindestens eine Fingerglied (34) in der abgesenkten Stellung befindet (Fig. 7D) und anschließend wieder aus dem Transferförderer (44) ausfährt, während sich das mindestens eine Fingerglied (34) in der erhöhten Stellung befindet (Fig. 7G).

3. Fahrerloses Transportsystem (18) nach einem der Ansprüche 1 oder 2, wobei
das FTF (16) eingerichtet ist, das Transportgut (12) mittels einer Pilgerschrittbewegung mit dem Stetigförderer (14) auszutauschen.

4. Fahrerloses Transportsystem (18) nach einem der Ansprüche 1 bis 3, wobei
das mindestens eine Fingerglied (34) einen ersten Finger (36) und einen zweiten Finger (38) umfasst,
der erste Finger (36) in seiner erhöhten Stellung vorzugsweise höher aus der Transportfläche (42) vorsteht als der zweite Finger (38) in dessen erhöhter Stellung,
der erste Finger (36) sich in seiner abgesenkten Stellung befindet und der zweite Finger (38) sich in seiner erhöhten Position befindet, während das FTF (16) das Transportgut (16) vom Transferförderer (20) aufnimmt, und
der erste Finger (36) sich in seiner erhöhten Stellung befindet, während das FTF (16) das Transportgut (12) vom Transferförderer (20) an den Stetigförderer (14) abgibt.

5. Fahrerloses Transportsystem (18) nach einem der vorhergehenden Ansprüche, wobei
die mindestens eine rampenartige Transferstation (20) eine erste Transferstation (22) zur Abgabe des Transportguts (12) vom FTF (16) an den Stetigförderer (14) und eine zweite Transferstation (24) zur Aufnahme des Transportguts (12) durch das FTF (16) von dem Stetigförderer (14) aufweist.

6. Fahrerloses Transportsystem (18) nach Anspruch 5, wobei der Transferförderer (44) der ersten Transferstation (22) im Wesentlichen stufenlos an den Stetigförderer (14) koppelbar ist.

7. Fahrerloses Transportsystem (18) nach Anspruch 5 oder 6, wobei der Transferförderer (44) der ersten Transferstation (22) eine Sperreinrichtung (50) aufweist, die eine Bewegung des Transportguts (12) nur in Richtung hin zum Stetigförderers (14) zulässt.

8. Fahrerloses Transportsystem (18) nach einem der Ansprüche 5 bis 7, wobei
die zweite Transferstation (24) eingerichtet ist, mit einer Stufe an den Stetigförderer (14) zu koppeln.

9. Fahrerloses Transportsystem (18) nach einem der Ansprüche 1 bis 8, wobei das Lastaufnahmemittel (30) in einem gegenüberliegenden Endabschnitt davon mindestens ein zusätzliches, vorzugsweise unbewegliches, Fingerglied (40) aufweist, das aus der Transportfläche (42) vorsteht.

10. Fahrerloses Transportsystem (18) nach einem der Ansprüche 1 bis 9, wobei ein höchster Punkt des mindestens einen Anschlags (48), insbesondere im Falle einer stufig angeordneten Aufnahmestation, niedriger als die Transportfläche (42) des FTF (16) liegt.

11. Fahrerloses Transportsystem (18) nach einem der vorhergehenden Ansprüche, wobei der Transferförderer (44) in Richtung des Stetigförderers (14) ausschließlich ansteigt.

12. Verfahren zum Austauschen eines Transportguts (12) zwischen einem fahrerlosen Transportfahrzeug, FTF, (16) und einem, insbesondere angetriebenen, Stetigförderer (14) über eine rampenartige Transferstation (20), die aus einem nicht angetrieben, geneigten Transferförderer (44) besteht,
dadurch gekennezichnet, dass an einem unteren Ende der Transferförderers (44) mindestens ein Anschlag (48) angeordnet ist oder der Transferförderer (44), wenn die Transferstation (20) als Abgabestation (22) ausgebildet ist, mit einer Sperreinrichtung (50) versehen ist, die verhindert, dass sich das Transportgut (12) von dem nicht angetriebenen Transferförderer (44) herunter bewegt, wobei die Transferstation (20) und das FTF (16) eingerichtet sind, das Transportgut (12) kämmend auszutauschen, während das FTF (16) entweder in die Transferstation (20) einfährt oder aus der Transferstation (20) ausfährt, wobei das FTF (16) ein Lastaufnahmemittel, LAM, (30) aufweist, das an seinem stromabwärtigen Ende mindestens ein Fingerglied (34) aufweist, das in einer erhöhten Stellung aus einer durch das LAM (30) definierten planen Transportfläche (42) herausragt und das in einer abgesenkten Stellung unterhalb der Transportfläche (42) positioniert ist; aufweisend die Schritte:
im Falle einer Abgabe des Transportguts (12) vom FTF (16) an den Stetigförderer (14):
mit dem beladenen FTF (16) parallel zum Transferförderer (44) kämmend in die Transferstation (20) einfahren, bis das FTF (16) das Transportgut (20) vollständig auf den Transferförderer (44) aufgeschoben hat;
danach mit dem FTF (16) aus der Transferstation (20) ausfahren, während sich das mindestens eine Fingerglied (34) in der abgesenkten Stellung befindet und das Transportgut auf dem Transferförderer (44) ruht; und
danach mit dem FTF (16) erneut kämmend in die Transferstation (20) einfahren, während sich das mindestens eine Fingerglied (34) in seiner erhöhten Stellung befindet, bis das Transportgut (12) vollständig mit dem mindestens einen Fingerglied (34) auf den Stetigförderer (14) aufgeschoben ist;
oder
im Falle einer Aufnahme des Transportguts (12) von dem Stetigförderer (14) durch das FTF (16):
Fördern des Transportguts (12) durch den Stetigförderer (14) von dem Stetigförderer (14) auf den Transferförderer (44) der Transferstation (20);
Stoppen des Transportguts (12), vorzugsweise passiv, auf dem Transferförderer (44);
danach mit dem leeren FTF (16) kämmend in die Transferstation (20) einfahren, während sich das mindestens eine Fingerglied (34) in der abgesenkten Stellung befindet, bis das mindestens eine Fingerglied (34) hinter einer Hinterkante des Transportguts (12) positioniert ist und eine Vorderkante auf dem LAM (30) ruht;
danach das mindestens eine Fingerglied (34) aus der abgesenkten Stellung in die erhöhte Stellung bewegen; und
schließlich mit dem FTF (16) kämmend aus der Transferstation (20) ausfahren, so dass das mindestens eine Fingerglied (34) in seiner erhöhten Stellung das Transportgut (12) vom Transferförderer (20) abschiebt.

13. Verfahren nach Anspruch 12, wobei das FTF (16) beim Einfahren vorwärtsfährt und beim Ausfahren in einer zum Vorwärtsfahren entgegengesetzten Richtung rückwärtsfährt.

14. Verfahren nach Anspruch 12 oder 13, wobei der Stetigförderer (14) während der Aufgabe aktiv unterstützend angetrieben wird, um das Transportgut (12) auf sich zu ziehen.

15. Verfahren nach einem der Ansprüche 12 bis 14, wobei der Stetigförderer (14) während der Aufnahme aktiv unterstützend angetrieben wird, um das Transportgut (12) auf dem Transferförderer (44) zu halten, während das anfangs leere FTF (16) kämmend in die Transferstation (20) einfährt.

## Claims

1. A driverless transport system, DTS, (18) comprising:
at least one ramp-like transfer station (20) configured to exchange a transport item (12) with a continuous conveyor (14), which is horizontally couplable thereto; and
a driverless transport vehicle, DTV, (16) for transporting the transport item (12) from and/or to the at least one transfer station (20);
wherein the DTV (16) comprises a load-handling device (30) forming a flat transport surface (42) on which the transport item (12) rests during a transport travel, wherein the load-handling device (30) has, in an end portion thereof, at least one finger member (34), which is switchable between a raised position and a lowered position, wherein the at least one finger member (34), in the raised position, protrudes from the transport surface (42);
wherein each of the transfer stations (20) consists of an inclined non-driven multi-track transfer conveyor (44);
**characterized in that** at least one stop (48) is arranged at a lower end of the transfer conveyor (44), or, when the transfer station (20) is formed as delivery station (22), the transfer conveyor (44) is provided with a blocking device (50) preventing the transport item (12) from moving off the non-driven transfer conveyor (44), and wherein the transfer conveyor (44) is configured to be meshingly underpassed by the DTV (16) so that:
in case, where the transport item (12) rests on the transfer conveyor (44), the transport item (12) is received by the DTV (16) from the transfer conveyor (44) by the DTV (16) exiting the transfer conveyor (44) and by the at least one finger member (34) being in the raised position; and
in case, where the transport item (12) rests on the transfer conveyor (44), the transport item (12) is delivered by the DTV (16) to the continuous conveyor (44), by the DTV (16) entering the transfer conveyor (44) and by the at least one finger member (34) being in the raised position.

2. The driverless transport system (18) of claim 1, wherein
the transfer conveyor (44) is configured to be meshingly underpassed by the DTV (16) so that, in the case, where the transport item (12) rests on the transfer conveyor (44), the transport item (12) is received by the DTV (16) from the transfer conveyor (44) by the DTV (16) entering the transfer conveyor (44) and the at least one finger member (34) being in the lowered position (Fig. 7D), and subsequently exiting the transfer conveyor (44) while the at least one finger member (34) is in the raised position (Fig. 7G).

3. The driverless transport system (18) of any one of claims 1 or 2, wherein
the DTV (16) is configured to exchange the transport item (12) with the continuous conveyor (14) by means of a pilgrim-step movement.

4. The driverless transport system (18) of any one of claims 1 to 3, wherein
the at least one finger member (34) includes a first finger (36) and a second finger (38),
the first finger (36) in its raised position preferably protrudes higher from the transport surface (42) than the second finger (38) in its raised position,
the first finger (36) is in its lowered position and the second finger (38) is in its raised position while the DTV (16) receives the transport item (12) from the transfer conveyor (20), and
the first finger (36) is in its raised position while the DTV (16) delivers the transport item (12) from the transfer conveyor (20) to the continuous conveyor (14).

5. The driverless transport system (18) of any one of the preceding claims, wherein
the at least one ramp-like transfer station (20) comprises a first transfer station (22) for delivering the transport item (12) from the DTV (16) to the continuous conveyor (14), and a second transfer station (24) for receiving the transport item (12) by the DTV (16) from the continuous conveyor (14).

6. The driverless transport system (18) of claim 5, wherein the transfer conveyor (44) of the first transfer station (22) is couplable to the continuous conveyor (14) substantially in a stepless manner.

7. The driverless transport system (18) of claim 5 or 6, wherein the transfer conveyor (44) of the first transfer station (22) comprises a blocking device (50) allowing movement of the transport item (12) only in the direction toward the continuous conveyor (14).

8. The driverless transport system (18) of any one of claims 5 to 7, wherein
the second transfer station (24) is configured to be coupled to the continuous conveyor (14) with a step.

9. The driverless transport system (18) of any one of claims 1 to 8, wherein the load-handling device (30) comprises, in an opposite end portion thereof, at least one additional, preferably immovable, finger member (40) protruding from the transport surface (42).

10. The driverless transport system (18) of any one of claims 1 to 9, wherein a highest point of the at least one stop (48), in particular in case of a receiving station arranged in steps, is lower than the transport surface (42) of the DTV (16).

11. The driverless transport system (18) of any one of the preceding claims, wherein the transfer conveyor (44) rises exclusively in the direction of the continuous conveyor (14).

12. A method for exchanging a transport item (12) between a driverless transport vehicle, DTV, (16) and a, in particular driven, continuous conveyor (14) via a ramp-like transfer station (20) consisting of a non-driven inclined transfer conveyor (44), wherein at least one stop (48) is arranged at a lower end of the transfer conveyor (44) or the transfer conveyor (44) is provided with a blocking device (50) preventing the transport item (12) from moving off the non-driven transfer conveyor (44), wherein the transfer station (20) and the DTV (16) are configured to meshingly exchange the transport item (12) while the DTV (16) either enters the transfer station (20) or exits the transfer station (20), wherein the DTV (16) has a load-handling device, LHD, (30) comprising at its downstream end at least one finger member (34) which, in a raised position, protrudes from a flat transport surface (42) defined by the LHD (30) and, in a lowered position, is positioned below the transport surface (42); comprising the steps of:
in case of delivering the transport item (12) from the DTV (16) to the continuous conveyor (14):
meshingly entering the transfer station (20), by the loaded DTV (16), parallel to the transfer conveyor (44) until the DTV (16) has completely pushed the transport item (12) onto the transfer conveyor (44);
subsequently, by the DTV (16), exiting the transfer station (20) while the at least one finger member (34) is in the lowered position and the transport item rests on the transfer conveyor (44); and
subsequently, by the DTV (16), meshingly entering the transfer station (20) again while the at least one finger member (34) is in its raised position until the transport item (12) has been completely pushed, by the at least one finger member (34), onto the continuous conveyor (14);
or
in case of receiving the transport item (12) from the continuous conveyor (14) by the DTV (16):
conveying the transport item (12), by the continuous conveyor (14), from the continuous conveyor (14) onto the transfer conveyor (44) of the transfer station (20);
stopping the transport item (12), preferably passively, on the transfer conveyor (44);
then meshingly entering the transfer station (20) by the empty DTV (16) while the at least one finger member (34) is in the lowered position until the at least one finger member (34) is positioned behind a rear edge of the transport item (12) and a front edge rests on the LHD (30);
then moving the at least one finger member (34) from the lowered position into the raised position; and
finally meshingly exiting the transfer station (20), by the DTV (16), so that the at least one finger member (34), in its raised position, pulls the transport item (12) off the transfer conveyor (20).

13. The method of claim 12, wherein the DTV (16) travels forward during the entering, and travels backward during the exiting, in a direction opposite to the forward direction.

14. The method of claim 12 or 13, wherein the continuous conveyor (14) is actively driven in a supporting manner during the delivering, in order to pull the transport item (12) onto itself.

15. The method of any one of claims 12 to 14, wherein the continuous conveyor (14) is actively driven in a supporting manner during the receiving, in order to hold the transport item (12) on the transfer conveyor (44) while the initially empty DTV (16) meshingly enters the transfer station (20).

## Revendications

1. Système de transport sans conducteur, FTS (18), comportant :
au moins un poste de transfert (20) en forme de rampe qui est conçu pour échanger un produit à transporter (12) avec un convoyeur continu (14) pouvant y être accouplé horizontalement ; et
un véhicule de transport sans conducteur, FTF (16), pour le transport du produit à transporter (12) depuis et/ou vers l'au moins un poste de transfert (20) ;
dans lequel le FTF (16) présente un moyen de réception de charge (30) qui forme une surface de transport (42) plane sur laquelle repose le produit à transporter (12) pendant un trajet de transport, dans lequel le moyen de réception de charge (30) présente, dans une section d'extrémité de celui-ci, au moins un élément à doigts (34) qui peut être commuté entre une position relevée et une position abaissée, dans lequel l'au moins un élément à doigts (34) dépasse de la surface de transport (42) dans la position relevée ;
dans lequel chacun des postes de transfert (20) est constitué d'un convoyeur de transfert (44) à plusieurs voies, incliné et non entraîné,
**caractérisé en ce qu'**au moins une butée (48) est disposée à une extrémité inférieure du convoyeur de transfert (44) ou le convoyeur de transfert (44), lorsque le poste de transfert (20) est réalisé comme un poste de distribution (22), est pourvu d'un dispositif de blocage (50) qui empêche le produit à transporter (12) de tomber du convoyeur de transfert (44) non entraîné, et dans lequel le convoyeur de transfert (44) est conçu pour passer sous le FTF (16) par engrènement de telle sorte que :
dans un certain cas, tandis que le produit à transporter (12) repose sur le convoyeur de transfert (44), le produit à transporter (12) est reçu par le FTF (16) depuis le convoyeur de transfert (44) par le fait que le FTF (16) sort du convoyeur de transfert (44) et que l'au moins un élément à doigts (34) se trouve dans la position relevée ; et
dans un certain cas, tandis que le produit à transporter (12) repose sur le convoyeur de transfert (44), le produit à transporter (12) est distribué par le FTF (16) au convoyeur continu (44) par le fait que le FTF (16) entre dans le convoyeur de transfert (44) et que l'au moins un élément à doigts (34) se trouve dans la position relevée.

2. Système de transport sans conducteur (18) selon la revendication 1, dans lequel le convoyeur de transfert (44) est conçu pour passer sous le FTF (16) par engrènement de telle sorte que, dans le cas où le produit à transporter (12) repose sur le convoyeur de transfert (44), le produit à transporter (12) est reçu par le FTF (16) depuis le convoyeur de transfert (44) par le fait que le FTF (16) entre dans le convoyeur de transfert (44) et que l'au moins un élément à doigts (34) se trouve dans la position abaissée (fig. 7D) et sort ensuite à nouveau du convoyeur de transfert (44), tandis que l'au moins un élément à doigts (34) se trouve dans la position relevée (fig. 7G).

3. Système de transport sans conducteur (18) selon l'une des revendications 1 ou 2, dans lequel
le FTF (16) est conçu pour échanger le produit à transporter (12) avec le convoyeur continu (14) au moyen d'un mouvement à pas de pèlerin.

4. Système de transport sans conducteur (18) selon l'une des revendications 1 à 3, dans lequel
l'au moins un élément à doigts (34) comprend un premier doigt (36) et un second doigt (38),
le premier doigt (36), dans sa position relevée, dépasse de préférence plus haut de la surface de transport (42) que le second doigt (38) dans sa position relevée,
le premier doigt (36) se trouve dans sa position abaissée et le second doigt (38) se trouve dans sa position relevée, tandis que le FTF (16) reçoit le produit à transporter (16) depuis le convoyeur de transfert (20), et
le premier doigt (36) se trouve dans sa position relevée, tandis que le FTF (16) distribue le produit à transporter (12) du convoyeur de transfert (20) au convoyeur continu (14).

5. Système de transport sans conducteur (18) selon l'une des revendications précédentes, dans lequel
l'au moins un poste de transfert (20) en forme de rampe présente un premier poste de transfert (22) pour la distribution du produit à transporter (12) du FTF (16) au convoyeur continu (14) et un second poste de transfert (24) pour la réception du produit à transporter (12) provenant du convoyeur continu (14) par le FTF (16).

6. Système de transport sans conducteur (18) selon la revendication 5, dans lequel le convoyeur de transfert (44) du premier poste de transfert (22) peut être accouplé sensiblement en continu au convoyeur continu (14).

7. Système de transport sans conducteur (18) selon la revendication 5 ou 6, dans lequel le convoyeur de transfert (44) du premier poste de transfert (22) présente un dispositif de blocage (50) qui n'autorise un mouvement du produit à transporter (12) qu'en direction du convoyeur continu (14).

8. Système de transport sans conducteur (18) selon l'une des revendications 5 à 7, dans lequel
le second poste de transfert (24) est conçu pour être accouplée avec une marche au convoyeur continu (14).

9. Système de transport sans conducteur (18) selon l'une des revendications 1 à 8, dans lequel le moyen de réception de charge (30) présente, dans une section d'extrémité opposée de celui-ci, au moins un élément à doigts supplémentaire (40), de préférence immobile, qui dépasse de la surface de transport (42).

10. Système de transport sans conducteur (18) selon l'une des revendications 1 à 9, dans lequel un point le plus haut de l'au moins une butée (48), en particulier dans le cas d'un poste de réception disposé en escalier, est situé plus bas que la surface de transport (42) du FTF (16).

11. Système de transport sans conducteur (18) selon l'une des revendications précédentes, dans lequel le convoyeur de transfert (44) s'élève exclusivement en direction du convoyeur continu (14).

12. Procédé pour l'échange d'un produit à transporter (12) entre un véhicule de transport sans conducteur, FTF (16), et un convoyeur continu (14), en particulier entraîné, par l'intermédiaire d'un poste de transfert (20) en forme de rampe qui est constitué d'un convoyeur de transfert (44) incliné et non entraîné,
**caractérisé en ce qu'**au moins une butée (48) est disposée à une extrémité inférieure du convoyeur de transfert (44) ou le convoyeur de transfert (44), lorsque le poste de transfert (20) est réalisé comme un poste de distribution (22), est pourvu d'un dispositif de blocage (50) qui empêche le produit à transporter (12) de tomber du convoyeur de transfert (44) non entraîné, dans lequel le poste de transfert (20) et le FTF (16) sont conçus pour échanger le produit à transporter (12) par engrènement, tandis que le FTF (16) soit entre dans le poste de transfert (20), soit sort du poste de transfert (20), dans lequel le FTF (16) présente un moyen de réception de charge, LAM (30), qui présente à son extrémité aval au moins un élément à doigts (34) qui, dans une position relevée, dépasse d'une surface de transport (42) plane définie par le LAM (30) et qui, dans une position abaissée, est positionné en dessous de la surface de transport (42) ; présentant les étapes consistant à :
dans le cas d'une distribution du produit à transporter (12) du FTF (16) vers le convoyeur continu (14) :
entrer dans le poste de transfert (20) avec le FTF (16) chargé, parallèlement au convoyeur de transfert (44), par engrènement, jusqu'à ce que le FTF (16) ait complètement poussé le produit à transporter (20) sur le convoyeur de transfert (44) ;
ensuite, sortir avec le FTF (16) du poste de transfert (20), tandis que l'au moins un élément à doigts (34) se trouve dans la position abaissée et que le produit à transporter repose sur le convoyeur de transfert (44) ; et
ensuite, entrer à nouveau avec le FTF (16) dans le poste de transfert (20) par engrènement, tandis que l'au moins un élément à doigts (34) se trouve dans sa position relevée, jusqu'à ce que le produit à transporter (12) soit complètement poussé avec l'au moins un élément à doigts (34) sur le convoyeur continu (14) ;
ou dans le cas d'une réception du produit à transporter (12) provenant du convoyeur continu (14) par le FTF (16) :
transporter le produit à transporter (12) par le convoyeur continu (14) du convoyeur continu (14) au convoyeur de transfert (44) du poste de transfert (20) ;
arrêter le produit à transporter (12), de préférence de manière passive, sur le convoyeur de transfert (44) ;
ensuite, entrer dans le poste de transfert (20) avec le FTF (16) vide par engrènement, tandis que l'au moins un élément à doigts (34) se trouve dans la position abaissée, jusqu'à ce que l'au moins un élément à doigts (34) soit positionné derrière un bord arrière du produit à transporter (12) et qu'un bord avant repose sur le LAM (30) ;
déplacer ensuite l'au moins un élément à doigts (34) de la position abaissée à la position relevée ; et
finalement, sortir du poste de transfert (20) avec le FTF (16) par engrènement, de sorte que l'au moins un élément à doigts (34), dans sa position relevée, pousse le produit à transporter (12) hors du convoyeur de transfert (20).

13. Procédé selon la revendication 12, dans lequel le FTF (16) avance lorsqu'il entre et recule lorsqu'il sort dans un sens opposé à celui de l'avance.

14. Procédé selon la revendication 12 ou 13, dans lequel le convoyeur continu (14) est entraîné de manière activement assistée pendant la tâche afin de tirer le produit à transporter (12) sur lui.

15. Procédé selon l'une des revendications 12 à 14, dans lequel le convoyeur continu (14) est entraîné de manière activement assistée pendant la réception afin de maintenir le produit à transporter (12) sur le convoyeur de transfert (44) tandis que le FTF (16) initialement vide entre dans le poste de transfert (20) par engrènement.
